# EUROPEAN PATENT SPECIFICATION

(11) **EP 1 924 025 B1**
(45) Date of publication and mention of the grant of the patent: **23.05.2012**
(21) Application number: 06817883.9
(22) Date of filing: 23.11.2006
(51) Int. Cl.: H04L 12/18

(54) **CONNECTION ESTABLISHMENT METHOD FOR MULTI PART COMMUNICATION SERVICE**
VERFAHREN ZUM AUFBAU EINER VERBINDUNG FÜR EINE VIELZAHL VON TEILNEHMERN
PROCÉDÉ D'ÉTABLISSEMENT DE LA CONNEXION POUR UN SERVICE DE COMMUNICATION À PLUSIEURS PARTIES

(30) Priority: 19.01.2006 CN 200610005698
(43) Date of publication of application: 21.05.2008
(73) Proprietor: Huawei Technologies Co., Ltd., Longgang District, Shenzhen Guangdong 518129 (CN)
(72) Inventor: LUO, Long, Guangdong 518129 (CN)
(74) Representative: Körber, Martin Hans
(86) International application number: PCT/CN2006/003154
(87) International publication number: WO 2007/082443

(56) References cited:
- CN-A- 1 228 652
- CN-A- 1 713 752
- JP-A- 2004 266 516
- US-A1- 2004 133 538
- US-B1- 6 950 501

## Description

### Field of the Invention

The present invention relates to technologies of multi-party communication service, and particularly, to a connection managing unit, a method and system for establishing a connection for a multi-party communication service.

### Background of the Invention

Various services in which an individual user or a group user takes part have been implemented in a communication system recently. Communication modes include text, voice, video and the combination of multimedia. An ordinary communication service is mainly provided for individual users and in such a service, only one or two User Equipments (UEs) participate in the communication in general. In a communication service in which group users take part, one or more group users participate in the communication in general, i.e. the communication process is not a general two party communication in which there are an inviting user and an invited user. There may be multiple inviting users and multiple invited users participating in the communication. Such a service in which group users take part is also called a multi-party communication service.

In the session of a multi-party communication service, UEs of users of various communication parties access a centralized managing server via their own access servers. The centralized managing server manages the signal procedure of the session in a centralized manner, grants media sending permission to each communication party, and replicates and distributes media data. In each session of a multi-party communication service, one centralized managing server and at least one access server are used. The centralized managing server is also called a server performing controlling function (CF) and the access server is also called a server performing participating function (PF). Moreover, one CF corresponds to a service session and one PF corresponds to a UE participating in the current session logically. Therefore, the centralized managing server is configured to perform a CF, and the access server is configured to perform at least one PF corresponding to at least one UE which accesses the access server.

At present, mainstream multi-party communication services include a Push-to-Talk over Cellular (PoC) service and a Conference service. In the session of the PoC service, a server performing the CF is a PoC server performing the CF, and the PoC server is also called a Controlling PoC server. A server performing the PF is a PoC server performing the PF, and the PoC server is also called a Participating PoC Server. In the session of the Conference service, a server performing the CF is a Conference server performing the CF, and the Conference server is also called a Controlling Conference Server. A server performing the PF is a Conference server performing the PF, and the Conference server is also called a Participating Conference Server.

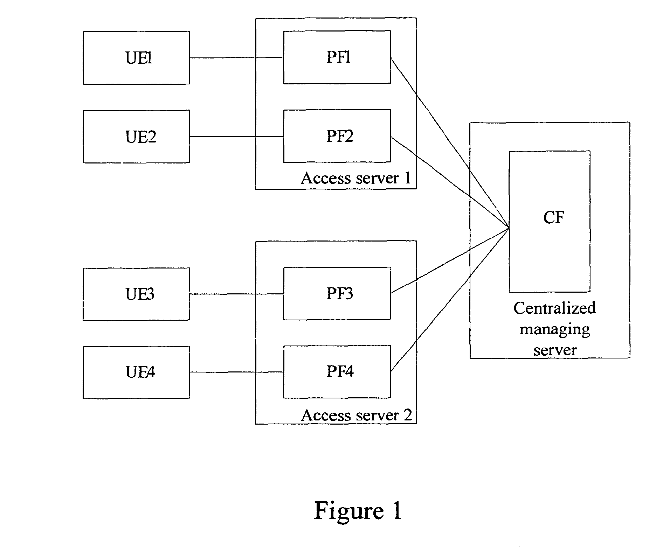

Figure 1 shows a schematic diagram illustrating the logical relationship among processing entities according to a conventional process for establishing a connection. As shown in Figure 1, there are four UEs, i.e. UE1, UE2, UE3 and UE4. The four UEs access the session via PF1, PF2, PF3 and PF4 corresponding to themselves. UE1 and UE2 access the session via access server 1, and access server 1 is configured to perform the functions of PF1 and PF2 and is called server 1 performing the PF. UE3 and UE4 access the session via access server 2, and access server 2 is configured to perform the functions of PF3 and PF4 and is called server 2 performing the PF. Moreover, the CF of the current session manages the session in a centralized manner and accesses PF1, PF2, PF3 and PF4. The function of the CF is implemented on a centralized managing server, and the centralized managing server is called a server performing the CF. The centralized managing server accesses access server 1 and access server 2 for managing the current session in a centralized manner.

When the CF distributes media data to each UE participating in the current session, the media data is distributed to the PF of each UE, i.e. the media data is replicated and distributed to PF1 corresponding to UE1, PF2 corresponding to UE2, PF3 corresponding to UE3 and PF4 corresponding to UE4. Therefore, redundant media transmission occurs between access server 1 and the centralized managing server once and the redundant media transmission also occurs between access server 2 and the centralized managing server once.

To sum up, redundant media transmission occurs twice for the transmission of media data of each session, i.e. the redundant media transmission occurs between the centralized managing server and access server 1 and between the centralized managing server and access server 2. Moreover, what is shown in Figure 1 is a session example in which merely four UEs participate. In an actual session of a multi-party communication service such as the PoC service, there may be tens of UEs participating in the session. The number of servers corresponding to the UEs is also larger than two. Therefore, the amount of the redundant media transmission generated is considerable. In addition, the centralized managing server transmits media stream once for each UE participating in the session, which occupies many processing resources of the centralized managing server. Therefore, it is difficult to implement and maintain the media processing function of the centralized managing server. Furthermore, it is also not favorable for the implementation and extension of other functions of the centralized managing server.

With the conventional connection establishing scheme of a multi-party communication service, system processing resources may not be effectively utilized for transmitting media data, which brings a heavy burden to the media processing of the centralized managing server. Therefore, it is difficult to the guarantee the quality of the multi-party communication service.

US20040133538A1 discloses a system, apparatus and method for the dynamic caching of data based on queries performed by a local application. JP2004266516A discloses an area network management server 25, which shares a pre-shared key using the MAC address of each communication terminal.

### Summary

Embodiments of the present invention provide a method and system for establishing a connection for a multi-party communication service to lighten the burden on the media processing of a Controlling PoC Server and improve the quality of a service.

Another embodiment of the present invention provides a connection managing unit which is capable of assisting a Controlling PoC Server in establishing a shared connection so as to lighten the burden on the media processing of the Controlling PoC Server.

The technical solutions in accordance with embodiments of the present invention are achieved as follows.

A method for establishing a connection for a Push-to-Talk over Cellular, PoC, service, comprising: receiving, by a Participating PoC Server performing participating function, connection establishing requests sent from at least two UEs accessing the Participating PoC Server; establishing, by a Controlling PoC Server performing controlling function and the Participating PoC Server, a shared connection between the Controlling PoC Server and the Participating PoC Server, wherein the shared connection is configured to transmit media data of the PoC service for the at least two UEs accessing the Participating PoC Server; and transmitting, by the Controlling PoC Server and the Participating PoC Server, the media data of the PoC service between the Controlling PoC Server and the Participating PoC Server via the shared connection..

In the scheme, the at least one UE accessing the Participating PoC Server includes a part or all of the UEs participating in the current session and accessing the Participating PoC Server.

In the scheme, the method of establishing the shared connection includes one of:
(a) establishing, by the Participating PoC Server and the Controlling PoC Server, one connection for each of UEs participating in a session and accessing the Participating PoC Server, and establishing a new connection as the shared connection for a part or all of the UEs accessing the Participating PoC Server and participating in the session; and
(b) determining, by the Controlling PoC Server, Participating PoC Servers that UEs participating in the session access, establishing, by the Controlling PoC Server and the each of the Participating PoC Servers, one connection for each of the UEs participating in the session, and establishing, by the Controlling PoC Server and each of the Participating PoC Servers, a new connection as the shared connection for a part or all of the UEs accessing the Participating PoC Server and participating in the session.

In the scheme, the method of establishing the shared connection includes one of:
(a) establishing, by the Participating PoC Server and the Controlling PoC Server, one connection for each of UEs accessing the Participating PoC Server and participating in the session; selecting, by the Participating PoC Server, one of the established connections as the shared connection for a part or all of the UEs participating in the session and accessing the Participating PoC Server; and
(b) determining, by the Controlling PoC Server, Participating PoC Servers that UEs participating in the session access, establishing, by the Controlling PoC Server and each of the Participating PoC Servers, one connection for each of the UEs participating in the session, and selecting, by the Controlling PoC Server and each of the Participating PoC Servers, one of the connections established as the shared connection for a part or all of the UEs accessing the Participating PoC Server and participating in the session.

In the scheme, the method of establishing the shared connection includes one of:
(a) establishing, by the Participating PoC Server and the Controlling PoC Server, the shared connection for a part or all of the UEs accessing the Participating PoC Server and participating in the session; and
(b) determining, by the Controlling PoC Server, Participating PoC Servers that UEs participating in the session access, and establishing, by the Controlling PoC Server and each of the Participating PoC Servers, the shared connection for a part or all of the UEs accessing the Participating PoC Server and participating in the session.

In the scheme, the method of establishing, by the Participating PoC Server and the Controlling PoC Server, the shared connection for a part

or all of the UEs accessing the Participating PoC Server and participating in the session includes:
establishing, by the Participating PoC Server, a sub-session for a part or all of the UEs accessing the Participating PoC Server and participating in the session, and establishing, by the Participating PoC Server and the Controlling PoC Server, a connection for the sub-session as the shared connection of each of UEs belonging to the sub-session; and
establishing, by the Controlling PoC Server and each of the Participating PoC Servers, the shared connection for a part or all of the UEs participating in the session and accessing the Participating PoC Server includes:
   establishing, by the Controlling PoC Server and each of the Participating PoC Servers, a sub-session for a part or all of the UEs accessing the Participating PoC Server and participating in the session, and establishing a connection for the sub-session as the shared connection of each of UEs belonging to the sub-session.

In the scheme, the method of establishing the shared connection for the at least one UE participating the session, accessing the Participating PoC Server includes:
establishing the shared connection for each of UEs participating in the session, accessing the Participating PoC Server, and having the same media capability demand.

In the scheme, the method of establishing the shared connection includes one of:
(a) establishing, by the Participating PoC Server and the Controlling PoC Server, a connection for each of UEs accessing the Participating PoC Server and participating in the session; determining, by the Participating PoC Server, various media capability demands of the UEs accessing the Participating PoC Server, and establishing, by the Participating PoC Server and the Controlling PoC Server, a new connection for each of the media capability demands as the shared connection for each of UEs participating in the session, accessing the Participating PoC Server, and with the same media capability demand; and
(b) establishing, by the Controlling PoC Server and each of the Participating PoC Servers, a connection for each of the UEs participating in the session, determining, by the Controlling PoC Server, various media capability demands of UEs accessing the Participating PoC Server and participating in the session, and establishing, by the Controlling PoC Server and the Participating PoC Server, a new connection for each of the media capability demands as the shared connection for each of UEs participating in the session, accessing the Participating PoC Server, and with the same media capability demand.

In the scheme, the method of establishing the shared connection includes one of:
(a) establishing, by the Participating PoC Server and the Controlling PoC Server, a connection for each of UEs accessing the Participating PoC Server and participating in the session; determining, by the Participating PoC Server, various media capability demands of the UEs accessing the Participating PoC Server and participating in the session, and selecting for each of the media capability demands one of the connections established as the shared connection for each of UEs participating in the session, accessing the Participating PoC Server, and with the same media capability demand; and
(b) determining, by the Controlling PoC Server, Participating PoC Servers that UEs participating in the session access, establishing, by the Controlling PoC Server and each of the Participating PoC Servers, one connection for each of the UEs participating in the session, determining various media capability demands of UEs accessing the Participating PoC Server and participating in the session, and selecting for each of the media capability demands one of the connections established as the shared connection for each of UEs participating in the session, accessing the Participating PoC Server, and with the same media capability demand.

In the scheme, the method of selecting, by the Participating PoC Server, one connection from the connections established for each of the media capability demands includes one of: arbitrarily selecting one connection from the connections established for the UEs accessing the Participating PoC Server; and arbitrarily selecting for each of the media capability demands one connection from the connections established for each of UEs participating in the session and having the same media capability demand; and
the method of selecting, by the Controlling PoC Server,
one connection from the connections established for each of the media capability demands includes one of: arbitrarily selecting one connection from the connections established for the UEs accessing the Participating PoC Server; and arbitrarily selecting for each of the media capability demands one connection from the connections established for each of UEs accessing the Participating PoC Server and having the same media capability demand.

In the scheme, the method further includes setting the properties of connections as one of:
(a) setting the property of the shared connection as Send Only for the Controlling PoC Server, or Receive Only for the Participating PoC Server; and setting the properties of connections other than the shared connection as Receive Only for the Controlling PoC Server, or Send Only for the Participating PoC Server;
(b) setting the property of the shared connection as Send and Receive.

In the scheme, the method further includes setting the properties of connections as one of:
(a) setting the property of the shared connection as Active, and setting the properties of connections other than the shared connection as Inactive or Active; and
(b) setting the property of the shared connection as Send Only for the Controlling PoC Server, or Receive Only and Active for the Participating PoC Server; and setting the properties of connections other than the shared connection as Receive Only for the Controlling PoC Server, or Send Only and Active for the Participating PoC Server;
(c) setting the property of the shared connection as Send and Receive and Active, and setting the properties of connections other than the shared connection as Inactive.

In the scheme, the method of establishing the shared connection includes one of:
(a) determining, by the Participating PoC Server, various media capability demands of UEs accessing the Participating PoC Server and participating in the session, and establishing, by the Participating PoC Server and the Controlling PoC Server for each of the media capability demands, a new connection as the shared connection of each of UEs participating in the session, accessing the Participating PoC Server, and with the same media capability demand; and
(b) determining, by the Controlling PoC Server, Participating PoC Servers that UEs participating in the session access, determining, by the Controlling PoC Server, various media capability demands of UEs accessing the Participating PoC Server and participating in the session for each of the Participating PoC Servers, and establishing, by the Controlling PoC Server and each of the Participating PoC Servers for each of the media capability demands, a new connection as the shared connection of each of UEs participating in the session, accessing the Participating PoC Server, and with the same media capability demand.

In the scheme, the method of establishing, by the Participating PoC Server and the Controlling PoC Server for each of the media capability demands, a new connection as the shared connection for each of UEs participating in the session, accessing the Participating PoC Server, and with the same media capability demand includes: establishing, by the Participating PoC Server for each of the media capability demands, a sub-session for each of UEs participating in the session, accessing the Participating PoC Server, and having the same media capability demand, and establishing, by the Participating PoC Server and the Controlling PoC Server, a connection for the sub-session as the shared connection of each of UEs belonging to the sub-session; and

the method of establishing, by the Controlling PoC Server and each of the Participating PoC Servers for each of the media capability demands, a new connection as the shared connection of each of UEs participating in the session, accessing the Participating PoC Server, and having the same media capability demand includes: establishing, by the Controlling PoC Server for each of the media capability demands, a sub-session for each of UEs having the media capability demand, and establishing, by the Controlling PoC Server and the Participating PoC Server, a connection for the sub-session as the shared connection of each of UEs participating in the session, accessing the Participating PoC Server, and belonging to the sub-session.

In the scheme, when the original media capability demand of the UE changes, the method further includes:
determining, by the Controlling PoC Server or the Participating PoC Server of a UE, a media capability demand shared by the UE and other UEs, judging whether a sub-session corresponding to the media capability demand shared by the UE and other UEs has been established in the Participating PoC Server of the UE, and if the sub-session has been established, adding the UE into the sub-session; if the sub-session has not been established, establishing a sub-session for the media capability demand shared by the UE and other UEs, adding the UE into the established sub-session, and establishing a shared connection for the sub-session.

In the scheme, when the original media capability demand of the UE changes, the method further includes:
determining, by the Controlling PoC Server or the Participating PoC Server of the UE, the original sub-session to which the UE belongs, judging whether the UE is the last UE of the original sub-session to which the UE belongs, and if the UE is the last UE of the original sub-session to which the UE belongs, releasing the original sub-session to which the UE belongs and the shared connection corresponding to the sub-session; if the UE is the not last UE of the original sub-session to which the UE belongs, reserving the original sub-session to which the UE belongs.

In the scheme, when the original media capability demand of the UE changes, the method further includes:
determining, by the Controlling PoC Server or the Participating PoC Server of a UE, a media capability demand shared by the UE and other UEs, judging whether a connection corresponding to the media capability demand shared by the UE and other UEs has been established in the Participating PoC Server of the UE, and if the connection has been established, adding the UE into the connection corresponding to the media capability demand shared by the UE and other UEs; if the connection has not been established, establishing a new connection for the media capability demand shared by the UE and other UEs and adding the UE into the newly established connection.

In the scheme, when the original media capability demand of the UE changes, the method further includes:
determining, by the Controlling PoC Server or the Participating PoC Server of the UE, the original connection corresponding to the UE, judging whether the UE is the last UE corresponding to the connection, and if the UE is the last UE corresponding to the connection, releasing the original connection corresponding to the UE; if the UE is not the last UE corresponding to the connection, reserving the original connection corresponding to the UE.

In the scheme, when the UE quits the session, the method further includes:
determining, by the Controlling PoC Server or the Participating PoC Server of a UE, the shared connection corresponding to the UE, judging whether the UE is the last UE of the shared connection, and if the UE is the last UE of the shared connection, releasing the shared connection; if the UE is not the last UE of the shared connection, quitting, by the UE, the shared connection and reserving the shared connection.

In the scheme, the media capability demand includes at least one of: media type, encoding and decoding format, media data encapsulation protocol and bandwidth; and
the same media capability demand is any or any combination of the same items in the media capability demand of each of the UEs.

In the scheme, the media type includes at least one of Voice, Video, Message and Data.

Embodiments of the present invention further provide a system for establishing a connection for a multi-party communication service, including: a Controlling PoC Server performing controlling function and a Participating PoC Server performing participating function, wherein the Participating PoC Server receives connection establishing requests sent from at least two UEs accessing the Participating PoC Server; the Controlling PoC Server and the Participating PoC Server are configured to establish a shared connection between the Controlling PoC Server and the Participating PoC Server, wherein the shared connection is configured to transmit media data of the PoC service for the at least two UEs accessing the Participating PoC Server; and the Controlling PoC Server and the Participating PoC Server are further configured to transmit the media data of the PoC service between the Controlling PoC Server and the Participating PoC Server via the shared connection.

In the system, the Controlling PoC Server is further configured to determine Participating PoC Servers that UEs participating in the session access according to a connection establishing signal sent from the Participating PoC Server, establish a shared connection for at least one UE accessing the Participating PoC Server and participating in the session between the Controlling PoC Server and each of the Participating PoC Servers and send a notification of the shared connection to the Participating PoC Server; and
the Participating PoC Server is further configured to send the connection establishing signal to the Controlling PoC Server, receive the notification sent from the Controlling PoC Server and determine the shared connection established between the Participating PoC Server and the Controlling PoC Server.

In the system, the Participating PoC Server is further configured to determine UEs accessing the Participating PoC Server and participating in the session, establish a shared connection for at least one UE accessing the Participating PoC Server and the participating in the session between the Participating PoC Server and the Controlling PoC Server, and send a notification of the shared connection to the Controlling PoC Server; and
the Controlling PoC Server is configured to determine the shared connection established between the Controlling PoC Server and the Participating PoC Server according to the notification sent form the connection managing unit.

The system further includes:
the connection managing unit connected between the Controlling PoC Server and the Participating PoC Server, configured to establish a shared connection for UEs accessing the Participating PoC Server and participating in the session between the connection managing unit and the Controlling PoC Server according to the connection establishing signal from each of the Participating PoC Server and send a notification of the shared connection to the Controlling PoC Server, and establish a connection for each of UEs participating in the session between the connection managing unit and the Participating PoC Server; and
the Controlling PoC Server is configured to determine the shared connection established between the Controlling PoC Server and the Participating PoC Server according to the notification sent form the connection managing unit.

In the system, the shared connection is configured to transmit the media data between the Controlling PoC Server and the Participating PoC Server.

Therefore, with the connection managing unit, method and system for establishing a connection for a multi-party communication service provided by embodiments of the present invention, the redundant media transmission of the Controlling PoC Server in a session process may be avoided, the burden on the media processing of the Controlling PoC Server may be lightened, and the media processing tasks of the Controlling PoC Server may be partaken,so that the quality of a service may be guaranteed.

### Brief Description of the Drawings

Figure 1 shows a schematic diagram illustrating the logical relationship among processing entities according to a process for establishing a connection.
Figure 2 shows a schematic flow chart of a method according to a first embodiment of the present invention.
Figure 3 shows a schematic flow chart of a method according to a second embodiment of the present invention.
Figure 4 shows a schematic flow chart of a method according to a third embodiment of the present invention.
Figure 5 shows a schematic diagram illustrating the logical relationship among processing entities in the processes for establishing connections according to Embodiments 1, 2 and 3.
Figure 6 shows a schematic flow chart of a method according to a fourth embodiment of the present invention.
Figure 7 shows a schematic flow chart of a method according to a fifth embodiment of the present invention.
Figure 8 shows a schematic flow chart of a method according to a sixth embodiment of the present invention.
Figure 9 shows a schematic diagram illustrating the logical relationship among processing entities in the procession for establishing connections according to the fourth, the fifth and the sixth embodiment.
Figure 10 shows a schematic flow chart of a method for updating a shared connection according to an embodiment of the present invention.
Figure 11 shows a schematic flow chart of a method for updating a shared connection according to another embodiment of the present invention.
Figure 12 shows a schematic flow chart of a method for releasing a shared connection according to an embodiment of the present invention.
Figure 13 shows a schematic diagram illustrating the structure of a system according to an embodiment of the present invention.

### Detailed Description of the Invention

Embodiments of the present invention are illustrated in detail as follows in conjunction with the accompanying drawings and embodiments.

Embodiments of the present invention provide a method for establishing a connection for a multi-party communication service. The method may be applied in a system including a UE, an access server and a centralized managing server. The primary theory of the method includes establishing a shared connection for each UE participating in the current session and accessing the centralized managing server via the same access server between the access server and the centralized managing server. Media data are transmitted between the access server and the centralized managing server via the established shared connection.

In embodiments of the present invention, a shared connection between an access server and a centralized managing server may be uniformly established for a part or all of UEs participating in the current session and accessing the access server, or a shared connection between the access server and the centralized managing server may be uniformly established for UEs with the same of media capability demand. The UEs having the same of media capability demand are a part of UEs participating in the current session and accessing the access server. The shared connection may be established for the UEs at the access server when receiving the connection establishing requests sent from the UEs, or the shared connection may be established for the UEs at the centralized managing server when receiving the connection establishing requests sent from the UEs. Therefore, there are multiple implementation modes of the method for establishing a connection in embodiments of the present invention. The embodiments are hereinafter described one by one with reference to drawings.

In the following embodiments, the scheme of the present invention is described with a PoC service as an example. A shared connection is established for UEs at an access server when receiving the connection establishing requests sent from the UEs. For the PoC service, the access server is called a server performing the PF, and a centralized managing server is called a server performing the CF in general.

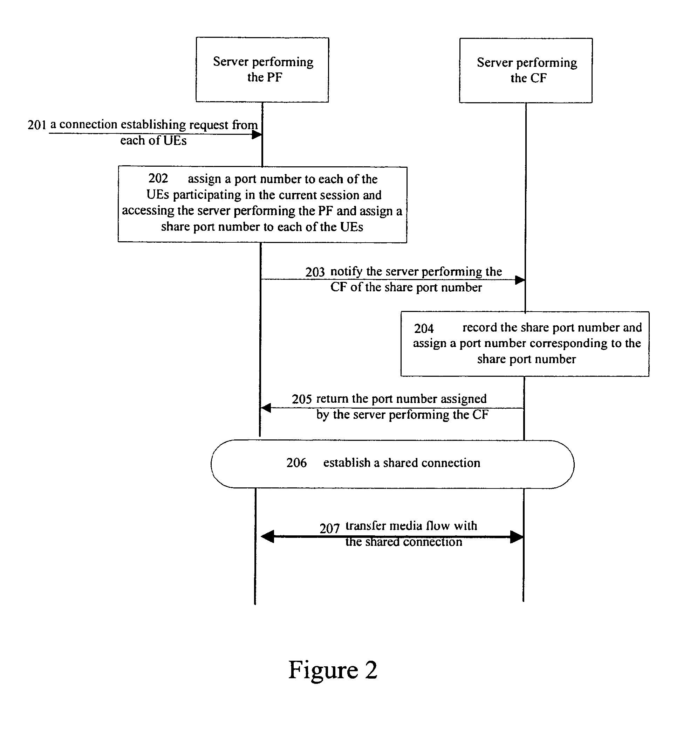

Figure 2 shows a schematic flow chart of a method according to the first embodiment of the present invention. As shown in Figure 2, the detailed processing includes the following processes.

Process 201: A server performing the PF receives connection establishing requests sent from different UEs.

In this process, a connection establishing request received by the server performing the PF and the server performing a CF generally refers to a session establishing request for a multi-party communication service. In a session establishing process, the connection establishing request may be the session establishing request sent from an inviting UE to the server performing the PF of the inviting UE, or the session establishing request sent from the server performing the CF to a server performing the PF of an invited UE. The session establishing request may be borne in an INVITE message of Session Initiation Protocol (SIP).

It is not concerned in the embodiments of the present invention that in which cases the connection establishing requests are transmitted to the server performing the PF or the server performing the CF. Embodiments of the present invention merely focus the process of establishing the shared connection by the server performing the PF or the server performing the CF when the connection establishing requests are received.

Process 202: The server performing the PF prepares for establishing a connection for each of the UEs and assigns a port number to each of the UEs as receiving the connection establishing requests. Moreover, the server performing the PF further assigns a shared port number to each of the UEs. The shared port number is configured to establish a shared connection.

The UEs corresponding to the connection establishing requests are the UEs which participate in the current session and accessed the server performing the PF. The server performing the PF may assign the shared port number to a part or all of the UEs which participates in the current session and accessed the server performing the PF, to establish the shared connection for the part or all of the UEs.

In this process, the process of assigning the port numbers to the UEs is defined in a conventional protocol. The server performing the PF assigns a port number to a UE to establish a connection when receiving a connection establishing request from the UE.

In this process, one of the port numbers assigned to the UEs may be selected arbitrarily as the uniform shared port number of the UEs and it is not required to assign a new port number to the UEs as the shared port number.

Process 203: The server performing the PF informs the server performing the CF of the shared port number mentioned in Process 202. The shared port number may be transmitted to the server performing the CF via a connection establishing request which is sent from the server performing the PF to the server performing the CF. The connection establishing request may be borne in a SIP INVITE message.

Process 204 - Process205: The server performing the CF records the received shared port number, assigns a port number corresponding to the shared port number, and returns the port number assigned in the server performing the CF to the server performing the PF.

Process 206 - Process 207: The server performing the CF and the server performing the PF record the port numbers assigned by themselves and the corresponding port numbers assigned in the opposite parties, establish a shared connection for the UEs participating in the current session and accessing the server performing the PF according to the shared port number and the port number assigned in the server performing the CF, and transmit media flows between themselves via the shared connection. For example, it is supposed that the shared port number assigned in the server performing the PF is A, and the port number corresponding to A and assigned in the server performing the CF is B. As the server performing the PF has recorded A and corresponding B and the server performing the CF has recorded B and corresponding A, the server performing the PF transmits data to the server performing the CF via A and receives data sent from B, and the server performing the CF transmits data to the server performing the PF via B and receives data sent from A.

The process of establishing the shared connection not only includes assigning the shared port but also includes assigning media transmission resources and preparing for transmitting the media data.

In addition, according to a conventional protocol, the server performing the PF is further required to transmit the port numbers assigned for the UEs in Process 202 to the server performing the CF. Therefore, the server performing the CF may assign a corresponding port number for each of the UEs participating in the current session and accessing the server performing the PF to establish a connection for each of the UEs. Since embodiments of the present invention emphasize the establishing of the shared connection, Process 203 - Process 207 merely describe the processing related to the shared port number and shared connection, while the process of establishing a connection for each of the UEs, which is in the scope of a conventional protocol, is omitted.

Although the server performing the PF and the server performing the CF establish a connection for each of the UEs, resources are merely reserved for the connections and media transmission resources are not assigned to the port numbers, and the connections are not configured to transmit the media data in deed. Therefore, the connections do not occupy too many system resources and do not affect the quality of a service.

When the server performing the CF determines to establish the shared connection as receiving the connection establishing requests sent from the UEs sent from the server performing the PF, the process of establishing the shared connection is similar to the one shown in Figure 1 and is described as follows.

Process 11: The server performing the CF receives the connection establishing requests sent from each of the servers performing the PF corresponding to the UEs participating in the current session, determines the server performing the PF that each of the UEs accesses, and performs Process 12 - Process 14 for the each of the servers performing the PF.

Process 12: The server performing the CF prepares for establishing connections for a part or all of the UEs participating in the current session and accessing the server performing the PF, and assigns a port number to each of the UEs. Moreover, the server performing the CF uniformly assigns a shared port number to the UEs. Then, the server performing the CF transmits the assigned shared port number to the server performing the PF of. In this Process, the shared port number may be a port number arbitrarily selected from the port numbers assigned for the UEs.

Process 13: The server performing the PF records the received shared port number, assigns a port number corresponding to the shared port number, and returns the port number assigned in the server performing the PF to the server performing the CF.

Process 14: The server performing the CF and the server performing the PF rccord the port numbers assigned by themselves and the corresponding port numbers assigned in the opposing parties, establish a shared connection for the UEs participating in the current session and accessing the server performing the PF according to the shared port number assigned in the server performing the CF and the port number assigned in the server performing the PF, and transmit media flows between themselves via the shared connection.

In addition, according to a conventional protocol, the server performing the CF transmits the port numbers assigned by the server performing the CF to the server performing the PF. The port numbers are assigned for the UEs participating in the current session and accessing the server performing the PF in Process 12. Therefore, the server performing the PF may assign a corresponding port number for each of the UEs to establish a connection for each of the UEs.

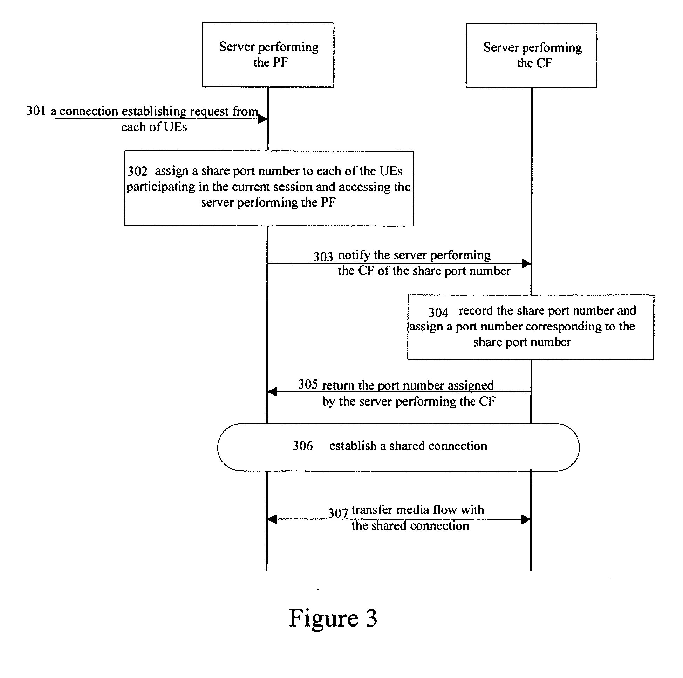

Figure 3 shows a schematic flow chart of a method according to the second embodiment of the present invention. As shown in Figure 3, the processing includes the following processes.

Process 301: A server performing the PF receives connection establishing requests sent from different UEs.

Process 302: The server performing the PF assigns a shared port number to a part or all of the UEs as receiving the connection establishing requests of the UEs participating in the current session and accessing the server performing the PF.

Process 303: The server performing the PF transmits the shared port number mentioned in Process 302 to a server performing the CF.

Process 304 - Process 305: The server performing the CF records the received shared port number, assigns a port number corresponding to the shared port number, and returns the port number assigned in the server performing the CF to the server performing the PF.

Process 306 - Process 307: The server performing the CF and the server performing the PF record the port numbers assigned by themselves and the corresponding port numbers assigned in the opposing parties, establish a shared connection for the UEs participating in the current session and accessing the server performing the PF according to the shared port number and the port number assigned in the server performing the CF, and transmit media flows between themselves via the shared connection.

When the server performing the CF determines to establish the shared connection as receiving the connection establishing requests sent from the UEs sent from the server performing the PF, the process of establishing the shared connection is similar to the one shown in Figure 3 and is described as follows.

Process 21: The server performing the CF receives the connection establishing requests from the UEs participating in the current session sent from each of the servers performing the PF, determines the server performing the PF that each of the UEs accesses, and performs Process 22 - Process 24 for each of the servers performing the PF.

Process 22: The server performing the CF prepares for establishing a shared connection for a part or all of the UEs participating in the current session and accessing the server performing the PF, and uniformly assigns a shared port number to the UEs. The server performing the CF transmits the assigned shared port number to the server performing the PF.

Process 23: The server performing the PF records the received shared port number, assigns a port number corresponding to the shared port number, and returns the port number assigned in the server performing the PF to the server performing the CF.

Process 24: The server performing the CF and the server performing the PF record the port numbers assigned by themselves and the corresponding port numbers assigned in the opposing parties, establish a shared connection for the UEs participating in the current session and accessing the server performing the PF according to the shared port number assigned in the server performing the CF and the port number assigned in the server performing the PF, and transmit media flows between themselves via the shared connection.

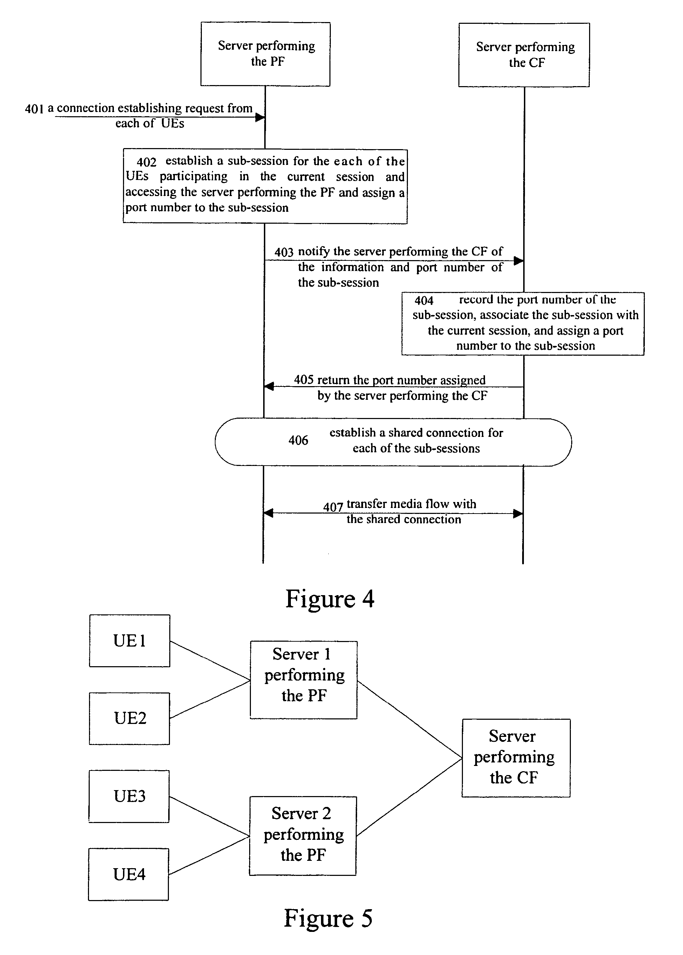

Figure 4 shows a schematic flow chart of a method according to the third embodiment of the present invention. Similar to the embodiment as shown in Figure 3, a shared connection for a part or all of UEs participating in the current session and accessing a server performing the PF is to be established. This embodiment provides a more detailed method for establishing the shared connection for a part or all of the UEs participating in the current session and accessing the server performing the PF, i.e. the shared connection is established for a part or all of the UEs participating in the current session and accessing the server performing the PF with a measure of establishing a sub-session. As shown in Figure 4, the detailed processing includes the following processes.

Process 401: A server performing the PF receives connection establishing requests sent from different UEs.

Process 402: The server performing the PF establishes a sub-session for a part or all of the UEs, and assigns a port number to the UEs as receiving the connection establishing requests sent from the UEs participating in the current session and accessing the server performing the PF. The port number is taken as a shared port number of the UEs belonging to the sub-session.

The method for establishing the sub-session in this process is described in detail in another application of this applicant and will not be further described herein.

Process 403: The server performing the PF transmits the information of the sub-session and the port number of the sub-session mentioned in Process 402 to a server performing the CF.

The information of the sub-session in this process includes the identifier of the sub-session and the information of the capability of the sub-session, etc. The port number of the sub-session may be sent to the server performing the CF in the information of the sub-session, or may be sent to the server performing the CF separately.

Process 404 - Process 405: The server performing the CF records the received port number of the sub-session, associates the sub-session with the current session according to the received information of the sub-session, establishes a sub-session, assigns the port number of the sub-session corresponding to the port number of the sub-session sent from the server performing the PF, and returns the port number of the sub-session assigned in the server performing the CF to the server performing the PF.

Process 406 - Process 407: The server performing the CF and the server performing the PF record the port numbers of the sub-session assigned by themselves and the port numbers of the sub-session assigned in the opposing parties, establish a shared connection for the UEs participating in the current session and accessing the server performing the PF according to the port numbers of the sub-session assigned in the two parties, and transmit media flows between themselves via the shared connection.

When the server performing the CF determines to establish the shared connection as receiving the connection establishing requests sent from the UEs sent from the server performing the PF, the process of establishing the shared connection is similar to the one shown in Figure 4 and is described as follows.

Process 31: The server performing the CF receives the connection establishing requests sent from the UEs participating in the current session sent from each of the servers performing the PF, determines the server performing the PF that each of the UEs accesses, and performs Process 32 - Process 34 for each of the servers performing the PF.

Process 32: The server performing the CF prepares for establishing a sub-session for a part or all of the UEs participating in the current session and accessing the server performing the PF, associates the sub-session with the current session, and assigns a port number to the sub-session. The server performing the CF transmits the information of the sub-session and the assigned port number of the sub-session to the server performing the PF.

Process 33: The server performing the PF records the received port number of the sub-session and the information of the sub-session, establishes a sub-session, assigns the port number of the sub-session corresponding to the received port number of the sub-session, and returns the port number of the sub-session assigned in the server performing the PF to the server performing the CF.

Process 34: The server performing the CF and the server performing the PF record the port numbers of the sub-session assigned by themselves and the port numbers of the sub-session assigned in the opposing parties, establish a shared connection for the current established sub-session, i.e. establish the shared connection for the UEs participating in the current session and accessing the server performing the PF according to the port numbers of the sub-session assigned in the two parties, and transmit media flows between themselves via the shared connection.

Figure 5 shows a schematic diagram illustrating the logical relationship among processing entities in the process for establishing connections according to the first, the second and the third embodiments. As shown in Figure 5, in the current session, UE 1 and UE 2 access server 1 performing the PF, UE 3 and UE 4 access server 2 performing the PF. Server performing the PF establishes a shared connection between server 1 performing the PF and a server performing the CF for UE 1 and UE 2, and server 2 performing the PF establishes a shared connection between server 2 performing the PF and the server performing the CF for UE3 and UE4. As can be seen in Figure 5, although there are four UEs participating in the current session, merely two shared connections are respectively established between server 1 performing the PF and the server performing the CF, and between server 2 performing the PF and the server performing the CF. Therefore, merely two copies of media data are replicated and distributed to server 1 performing the PF and server 2 performing the PF when the server performing the CF distributes media data. Therefore, in comparison with the conventional method, redundant media transmission may be avoided greatly, system resources may be saved, and the quality of a service may be improved significantly.

In Figure 5, the server performing the CF negotiates with server 1 performing the PF for media capability, and obtains the result about the media capability when establishing the shared connection between the server performing the CF and server 1 performing the PF. The server performing the CF sends media data to server 1 performing the PF according to the result. When UE1 and UE2 have the same media capability demand, sever 1 performing the PF merely replicates and then distributes the received media to UE1 and UE2 if media data received by server 1 performing the PF may be supported by the media capability demand of UE1 and UE2. If the media data received by server 1 performing the PF may not be supported by the media capability demand of UE1 and UE2, server 1 performing the PF converts the format of the received media data according to the media capability demands of UE1 and UE2 to meet the media capability demands of UE1 and UE2, and then replicates and distributes the converted media data. When UE1 and UE2 have different media capability demands, server 1 performing the PF replicates the media data first, and then, converts the format of the copies of the media data obtained by replication according to the media capability demands of UE1 and UE2 to meet the media capability demands of UE1 and UE2, and then distributes the converted media data.

However, in practical applications, the media capability of a server performing the PF is not powerful enough in general. Therefore, the media capability of the server performing the PF may not match the media capability of a UE, and the server performing the PF may not have the function of converting the format of media data. The server performing the CF has a variety of functions in general. The server performing the CF has multiple media capability which may match the media capability of the UE and may convert the format of the media data. As for this case, embodiments of the present invention further provide another implementation method, i.e. a shared connection is established for UEs which have the same media capability demand, participate in the current session and access a server performing the PF between the server performing the PF and a server performing the CF. Detailed embodiments of the implementation method are hereinafter described.

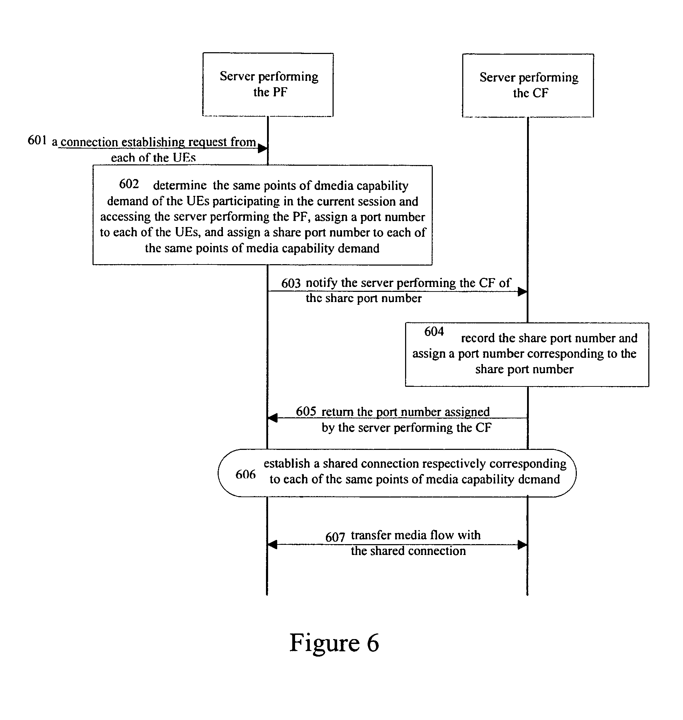

Figure 6 shows a schematic flow chart of a method according to the fourth embodiment of the present invention. As shown in Figure 6, the detailed process includes the following processes.

Process 601: A server performing the PF receives connection establishing requests sent from different UEs.

Process 602: After receiving the connection establishing requests sent from different UEs, the server performing the PF establishes a connection for each of the UEs and assigns a port number to each of the UEs first of all. Furthermore, the server performing the PF determines same media capability demands of the different UEs, assigns a port number to each of the same media capability demands. The port number is taken as the shared port number of the UEs having the same media capability demand.

In this process, one of the port numbers assigned to the UEs may be selected as the shared port number of the UEs having the same media capability demand, and a new shared port number may not be required to be assigned additionally for the UEs having the same media capability demand. The shared port number corresponding to each of the same media capability demands may be selected from the port numbers assigned to the UEs; or the port numbers corresponding to a part of the same media capability demands may be selected from the port numbers assigned to the UEs, and the port numbers corresponding to the rest part of the same media capability demands are required to be assigned newly. There are two basic methods for selecting the port numbers. First: For each of the same media capability demands, one of all the port numbers assigned to the UEs may be selected arbitrarily as the shared port number corresponding to the same media capability demand. Second: For each of the same media capability demands, one of the port numbers assigned to the UEs having the same media capability demands is selected arbitrarily as the shared port number corresponding to the same media capability demand. Where, selecting a port number for each of the same media capability demands in this process is an implementation method for selecting a connection for each of the same media capability demands in fact. Merely some examples of various methods for selecting the connection are described herein and are not configured to limit the specific method for selecting the connection.

Process 603: The server performing the PF transmits the shared port numbers of the same media capability demands mentioned in Process 602 to a server performing the CF.

Process 604 - Process 605: The server performing the CF records the received shared port numbers, assigns port numbers corresponding to the shared port numbers, and returns the port numbers assigned in the server performing the CF to the server performing the PF.

Process 606 - Process 607: The server performing the CF and the server performing the PF record the port numbers assigned by themselves and the port numbers assigned in the opposing parties, establish shared connections corresponding to the same media capability demands for the UEs participating in the current session and accessing the server performing the PF according to the port numbers assigned in the two parties. Then, the server performing the PF establishes a corresponding relation between the UEs and their respective same media capability demand, and a corresponding relation between each same media capability demand and each shared connection. The server performing the CF establishes a corresponding relation between each same media capability demand and each shared connection. Therefore, the server performing the CF may replicate the media data and convert the format of the media data according to the same media capability demands corresponding to the current shared connections, and distribute the media data in various media data formats to the server performing the PF via the shared connections corresponding to the media data. The server performing the PF determines each same media capability demand corresponding to each shared connection and the UEs corresponding to the same media capability demand, and distributes the media data received via each of the shared connections to the UEs having the same media capability demand corresponding to the shared connection.

In addition, according to a conventional protocol, after assigning port numbers to the UEs in Process 602, the server performing the PF transmits the port numbers to the server performing the CF. Therefore, the server performing the CF may assign a corresponding port number for each of the UEs to establish a connection for each of the UEs.

The media capability demand includes at least one of the following items: media type, media data encapsulation protocol, encoding and decoding format and bandwidth. The media type includes at least one of the following items: voice, video, message and data. The same media capability demand refers to the same media capability demand of the UEs, or may be at least one of the same items of the media capability demands of the UEs. For example, supposing that the media capability demand of UE1 is media type A, bandwidth B, encoding and decoding format 1 and the media capability demand of UE2 is media type A, bandwidth B, encoding and decoding format 2, the same items of the media capability demands of UE1 and UE2 include media type A and bandwidth B. Therefore, the same media capability demand of UE1 and UE2 may be media type A, bandwidth B, or the combination of media type A and bandwidth B.

Embodiments of the present invention do not emphasize on how to determine the same media capability demands of UEs. The same media capability demands of UEs are determined according to a special policy configured in advance by combining the demands of a network operator, a service provider and a user. For example, it is supposed that a shared connection is merely provided for media type A in a network. When the media capability demand of UE1 is media type A, bandwidth B, encoding and decoding format 1, the media capability demand of UE2 is media type A, bandwidth B, encoding and decoding format 2, and the media capability demand of UE3 is media type B, bandwidth B, encoding and decoding format 1, it is determined that UE1 and UE2 have the same media capability demand, i.e. media type A according to the preset policy. Therefore, a shared connection may be established for the same media capability demand (i.e. media type A). Or, it is supposed that a shared connection may merely be provided for a single media type in a network. When UE1 and UE2 have the same media capability demand such as, the same media type: audio and video, the same encoding and decoding format and the same bandwidth, it is determined according to the preset policy that there are two same media capability demand between UE1 and UE2, i.e. audio and video. Therefore, two shared connections are established for the two same media capability demands to transmit video data and audio data respectively.

When the server performing the CF determines to establish the shared connection as receiving the connection establishing requests sent from the UEs sent from the server performing the PF, the process of establishing the shared connection is similar to the one shown in Figure 6 and is described as follows.

Process 41: The server performing the CF receives the connection establishing requests sent from the UEs participating in the current session sent from each of the servers performing the PF, determines the server performing the PF that each of the UEs accesses, and Process 42 - Process 44 are performed for each of the servers performing the PF.

Process 42: The server performing the CF establishes a connection for each of the UEs participating in the current session and accessing the server performing the PF, and assigns a port number to each of the UEs first of all. Furthermore, the server performing the CF determines the same of media capability demands of the UEs, assigns a shared port number to UEs having the same media capability demand, and notifies the server performing the PF of the assigned shared port numbers corresponding to the same media capability demands. Where, a part or all of the shared port numbers are arbitrarily selected from the port numbers assigned to the UEs.

Process 43: The server performing the PF records the received shared port numbers, assigns port numbers corresponding to the shared port numbers, and returns the port numbers assigned in the server performing the PF to the server performing the CF.

Process 44: The server performing the CF and the server performing the PF record the port numbers assigned by themselves and the corresponding port numbers assigned in the opposing parties, establish a shared connection for each of the UEs participating in the current session and accessing the server performing the PF according to the port numbers assigned in the two parties, and transmit media flows between the server performing the PF and the server performing the CF via the shared connection.

According to a conventional protocol, after assigning port numbers to the UEs participating in the current session and accessing the server performing the PF in Process 42, the server performing the PF transmits the port numbers assigned by the server performing the PF to the server performing the CF. Therefore, the server performing the CF may assign a corresponding port number for each of the UEs to establish a connection for each of the UEs.

In addition, in the embodiments shown in Figures 2 and 5, i.e. in the embodiments in which not only a connection is established for each of the UEs participating in the current session and accessing the server performing the PF, but also a shared connection is established for the UEs, the property of the connections may be further set in the negotiation process of the Service Discovery Protocol (SDP) when establishing the connections. The property of a connection mainly includes two types: First: The property referring to the sending direction of the media data such as, Send Only, Receive Only, and Send and Receive. If a multi-party communication service adopts a semi-duplex communication mode, the data transmission status of the shared connection may merely be uplink transmission or downlink transmission for a shared connection at the same time. Therefore, the property of the shared connection may be set as Send and Receive. If a multi-party communication service adopts a full-duplex communication mode, the connections which are not used as the shared connections may be configured to transmit uplink data, while the shared connections are configured to transmit downlink data. In such a case, the property of the shared connections may be set as Receive only for the server performing the PF or Send Only for the server performing the CF, and the property of the connections which are not used as the shared connections may be set as Send Only for the server performing the PF or Receive only for the server performing the CF. Second: The property referring to the available status of a connection such as, Inactive or Active. The property of the shared connections is set as Active in general. Certainly, the shared connections may not be used for the moment and may be set as Inactive under certain special circumstances. The property of the connections which are not used as the shared connections may also be set as Active or Inactive as demanded. When a multi-party communication service adopts a semi-duplex communication mode, the property of the shared connections is set as Send and Receive, and the connections which are not used as the shared connections are not configured to transmit media data. If the property of the connections which are not used as the shared connections is still set Active, and reserved resources are assigned to the connections, certain resources are wasted. In order to save the resources, the property of the shared connections may be further set as Active while the property of the connections which are not used as the shared connections may be further set as Inactive. Therefore, the connections which are not used as the shared connections may not occupy the resources. The property of the connections may be set according to parameters carried in connection establishing requests. Default properties of the connections may be preset and the property of some connections not adopting the default properties may be set according to the parameters carried in the connection establishing requests. The property of the connections may be updated and revised according to a message such as an UPDATE message after the connections are established. In embodiments of the present invention, the method for setting and updating the property of the connections is not limited.

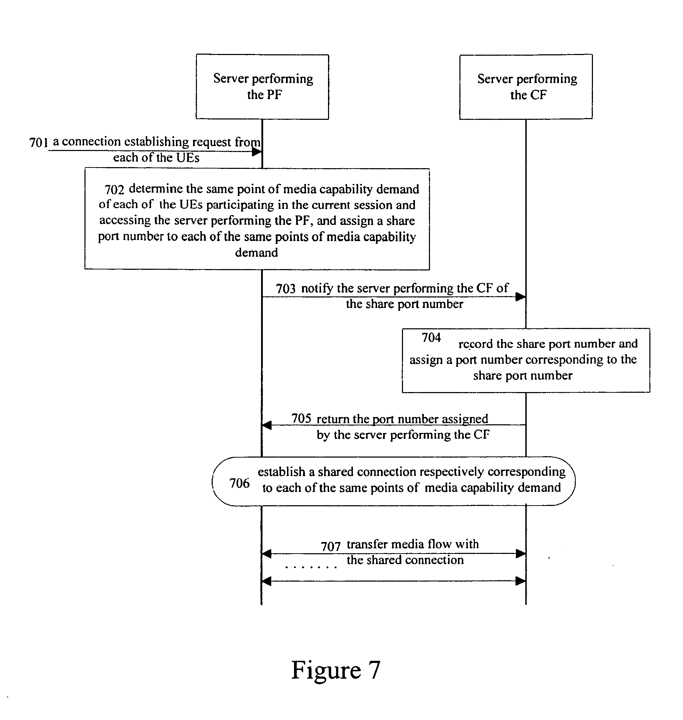

Figure 7 shows a schematic flow chart of a method according to the fifth embodiment of the present invention. As shown in Figure 7, the detailed processing includes the following processes.

Process 701: A server performing the PF receives connection establishing requests sent from different UEs.

Process 702: After receiving the connection establishing requests sent from different UEs, the server performing the PF determines same media capability demands of the UEs, assigns a shared port number to each of the same media capability demands, i.e. the shared port number corresponds to one of the same media capability demands.

Process 703: The server performing the PF transmits the shared port numbers mentioned in Process 702 to a server performing the CF.

Process 704 - Process705: The server performing the CF records the received shared port numbers, assigns port numbers corresponding to the shared port numbers, and returns the port numbers assigned by the server performing the CF to the server performing the PF.

Process 706 - Process 707: The server performing the CF and the server performing the PF record the port numbers assigned by themselves and the port numbers assigned in the opposing parties, establish shared connections corresponding to the same media capability demands for the UEs participating in the current session and accessing the server performing the PF according to the port numbers assigned in the two parties. Then, the server performing the PF establishes a corresponding relation between the UEs and their respective same media capability demand, and a corresponding relation between each same media capability demand and each shared connection. The server performing the CF establishes a corresponding relation between each same media capability demand and each shared connection. Therefore, the server performing the CF may replicate the media data and convert the format of the media data according to the same media capability demands corresponding to the current shared connections, and distribute the media data in various media data formats to the server performing the PF via the shared connections corresponding to the media data. The server performing the PF determines each same media capability demand corresponding to each shared connection and the UEs corresponding to the same media capability demand, and distributes the media data received via each of the shared connections to the UEs having the same media capability demand corresponding to the shared connection.

When the server performing the CF determines to establish the shared connection as receiving the connection establishing requests sent from the UEs sent from the server performing the PF, the process of establishing the shared connection is similar to the one shown in Figure 7 and is described as follows.

Process 51: The server performing the CF receives the connection establishing requests sent from the UEs participating in the current session sent from each of the servers performing the PF, determines the server performing the PF that each of the UEs accesses, and performs Process 52 - Process 54 for each of the servers performing the PF.

Process 52: The server performing the CF determines the same media capability demands of the UEs and assigns a shared port number to UEs having the same media capability demand, and transmits the assigned shared port numbers to the server performing the PF.

Process 53: The server performing the PF records the received shared port numbers, assigns port numbers corresponding to the shared port numbers, and returns the port numbers to the server performing the CF.

Process 54: The server performing the CF and the server performing the PF record the port numbers assigned by themselves and the corresponding port numbers assigned in the opposing parties, establish a shared connection for each of the UEs participating in the current session and accessing the server performing the PF according to the port numbers assigned in the two parties, and transmit media flows which correspond to the same media capability demands between the server performing the PF and the server performing the CF via the shared connections.

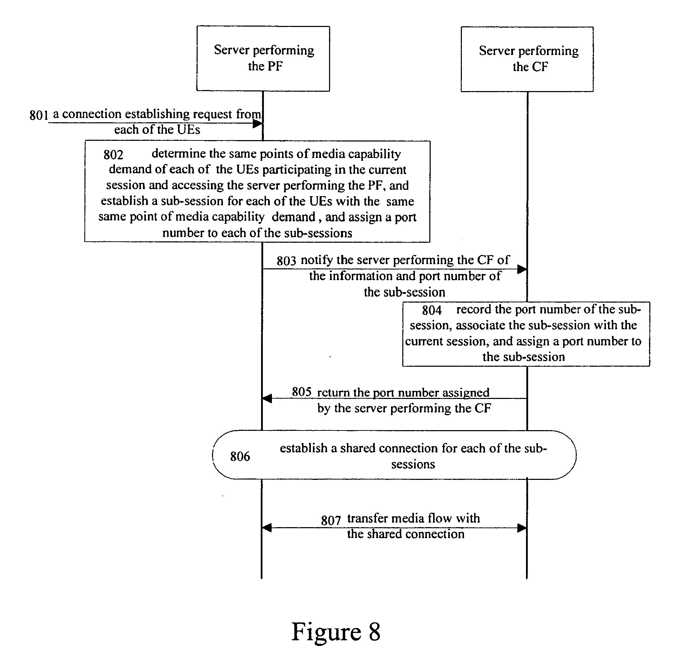

Figure 8 shows a schematic flow chart of a method according to the sixth embodiment of the present invention. Similar to the embodiment shown in Figure 7, in this embodiment, a shared connection is established for the UEs having the same media capability demand among the UEs participating in the current session and accessing the server performing the PF. In an implement of the embodiment, a shared connection for UEs accessing the same server performing the PF and having the same media capability demand is established, i.e. a shared connection is established for the UEs participating in the current session, accessing the server performing the PF and having the same media capability demand with a method of establishing the same sub-session. As shown in Figure 8, the detailed processing includes the following processes.

Process 801: A server performing the PF receives connection establishing requests sent from different UEs.

Process 802: After receiving the connection establishing requests sent from different UEs, the server performing the PF determines the same media capability demands of the UEs, establishes a sub-session for UEs having the same media capability demand, and assigns a port number to each of the sub-sessions. The port number is used as the shared port number of the UEs which belong to the sub-session corresponding to the port number.

Process 803: The server performing the PF transmits the information of the sub-sessions mentioned in Process 802 and the port numbers of the sub-sessions to a server performing the CF.

Process 804 - Process 805: The server performing the CF records the received port numbers of the sub-sessions, associates the sub-sessions with the current session according to the received information of the sub-sessions, assigns port numbers of the sub-sessions corresponding to the port numbers of the sub-sessions, and returns the port numbers of the sub-sessions to the server performing the PF.

Process 806 - Process 807: The server performing the CF and the server performing the PF record the port numbers of the sub-sessions assigned by themselves and the corresponding port numbers of the sub-sessions assigned in the opposing parties, establish shared connections according to the port numbers of the sub-sessions assigned in the two parties. Meanwhile, the server performing the PF establishes a corresponding relation between each UE and each sub-session, and a corresponding relation between each sub-session and each shared connection. The server performing the CF creates a corresponding relation between each same media capability demand and each sub-session and a corresponding relation between each sub-session and each shared connection of the sub-session. Therefore, the server performing the CF may replicate media data and convert the format of the media data according to the same media capability demands corresponding to the current sub-sessions, determine the sub-session corresponding to each of the same media capability demands, i.e. the sub-session corresponding to each of the formats of the media data, and respectively distribute the media data in various media data formats to the server performing the PF via the shared connections corresponding to the sub-sessions. The server performing the PF determines the sub-session corresponding to each of the shared connections and UEs corresponding to each of the sub-sessions, and distributes the media data received via the shared connections to the UEs belonging to the corresponding sub-session.

When the server performing the CF determines to establish the shared connection as receiving the connection establishing requests sent from the UEs sent from the server performing the PF, the process of establishing the shared connection is similar to the one shown in Figure 8 and is described as follows.

Process 61: The server performing the CF receives the connection establishing requests sent from the UEs participating in the current session sent from each of the servers performing the PF, determines the server performing the PF that each of the UEs accesses, and performs Process 62 - Process 64 for each of the servers performing the PF.

Process 62: The server performing the CF determines the same media capability demands of the UEs participating in the current session and accessing the server performing the PF, establishes a sub-session for UEs having the same media capability demand, i.e. each of the same media capability demands corresponding to a sub-session, associates each of the sub-sessions with the current session, and assigns a port number to each of the sub-sessions; and transmits the information of the sub-sessions and the assigned port numbers to the server performing the PF.

Process 63: The server performing the PF records the received port numbers of the sub-sessions and the information of the sub-sessions, establishes the sub-sessions, assigns port numbers of the sub-sessions corresponding to the received port numbers of the sub-sessions, and returns the port numbers of the sub-sessions to the server performing the CF.

Process 64: The server performing the CF and the server performing the PF record the port numbers of the sub-sessions assigned by themselves and the corresponding port numbers of the sub-sessions assigned in the opposing parties, establish shared connections of the current sub-sessions according to the port numbers of the sub-sessions assigned in the two parties, and transmit media flows between the server performing the PF and the server performing the CF via the shared connections. Each of the shared connections corresponds to each same media capability demand. And each of the shared connections is shared by the UEs participating in the current session, accessing the server performing the PF, and having the same media capability demand.

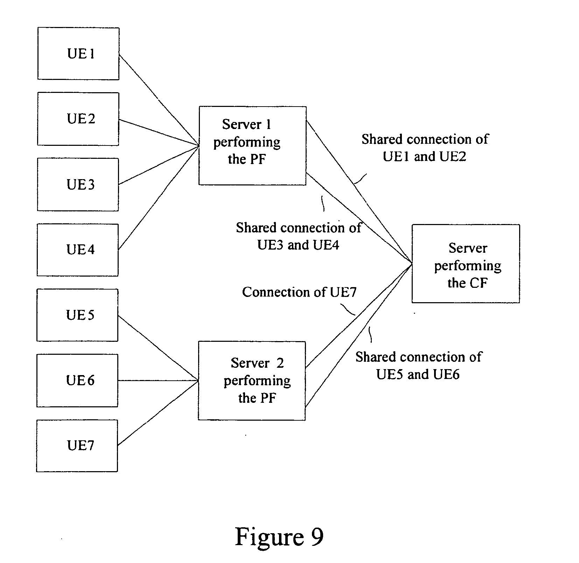

Figure 9 shows a schematic diagram illustrating the logic relationship among processing entities in the processes for establishing connections according to Embodiments 4, 5 and 6. As shown in Figure 9, UE1, UE2, UE3 and UE4 access server 1 performing the PF, UE5, UE6 and UE7 access server 2 performing the PF. UE1 and UE2 have the same media capability demand, UE3 and UE 4 have the same media capability demand, and UE5 and UE6 have the same media capability demand. Server 1 performing the PF establishes two shared connections between server 1 performing the PF and the server performing the CF for UE1, UE2, UE3 and UE4. The two shared connections include a shared connection for UE1 and UE2 and a shared connection for UE3 and UE4. Server 2 performing the PF establishes two shared connections between server 2 performing the PF and the server performing the CF for UE5, UE6 and UE7. The two shared connections include a connection for UE7 and a shared connection for UE5 and UE6.

As can be seen in Figure 9, although there are seven UEs participating in the current session, merely four service connections are established between server 1 performing the PF and the server performing the CF, and between server 2 performing the PF and the server performing the CF. Therefore, merely four copies of media data are replicated and distributed to server 1 performing the PF and server 2 performing the PF when the server performing the CF distributes the media data. Therefore, compared with a conventional method, the transmission of redundant media may be greatly avoided, system resources may be saved, and the quality of services may be significantly improved. Moreover, since the shared connections are established according to the same media capability demands, the conversation of a media format is performed by the server performing the CF while the servers performing the PF merely take charge of simple replication and distributing.

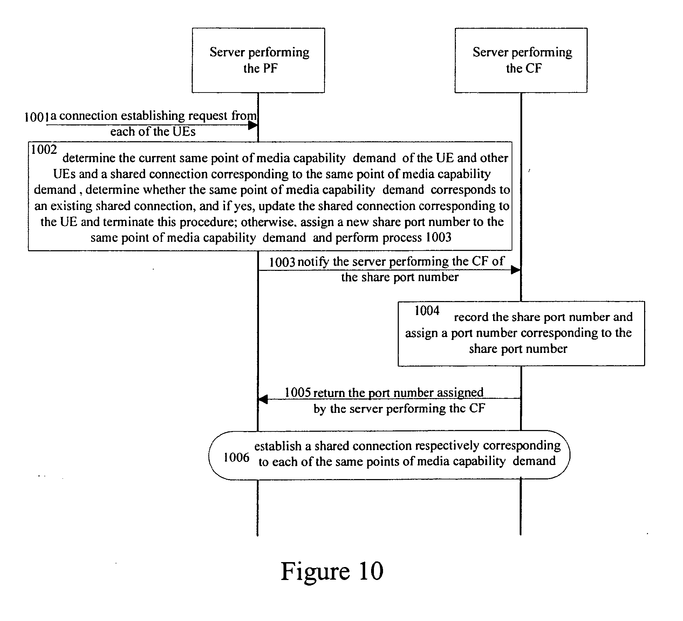

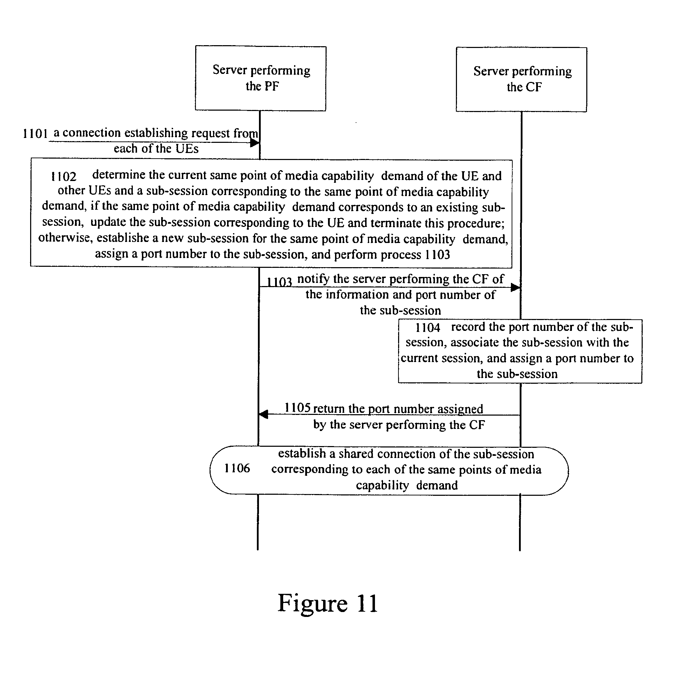

According to the processing methods shown in Figure 6 to Figure 9, UEs having the same media capability demand use a shared connection between a server performing the PF and a server performing the CF. However, a UE may change its media capability demand at any moment in the process of a multi-party communication service session. In such a case, the shared connection of the UE should be updated correspondingly. For such a case, the method of the present invention further includes the processing shown in Figure 10 Figure 11.

Figure 10 shows a schematic flow chart of a method for updating a shared connection according to an embodiment of the present invention. In this embodiment, a server performing the PF determines to update a shared connection as receiving a media capability demand update message of a UE. As shown in Figure 10, the detailed processing includes the following processes.

Process 1001: A server performing the PF receives a media capability demand update message sent from a UE. The message carries the user identifier of the UE and the information of the media capability demand and so on. The media capability demand update message may be borne by an UPDATE message or a REINVITE message of the SIP protocol.

Process 1002: The server performing the PF determines the same media capability demand between the UE and the other UEs according to the received media capability demand update message, further determines a shared connection corresponding to the same media capability demand, judges whether the same media capability demand corresponds to an existing shared connection., the server performing the PF updates the shared connection corresponding to the UE, removes the information of the UE from the information of the existing shared connection corresponding to the UE, adds the information of the UE into the information of the shared connection corresponding to the current same media capability demand of the UE, and terminates this procedure. If the same media capability demand does not correspond to an existing shared connection, the server performing the PF assigns a new shared port number for the current same media capability demand of the UE and then performs Process 1003.

In this process, it is further required to judge whether the UE is the last UE corresponding to the shared connection, when the information of the UE is removed from the information of the existing shared connection corresponding to the UE. If the UE is the last UE corresponding to the shared connection, the shared connection is released when removing the information of the UE; if the UE is not the last UE corresponding to the shared connection, merely the information of the UE is removed.

Process 1003: The server performing the PF transmits the port number assigned in Process 1002 to a server performing the CF. The server performing the PF may set the port number in a media capability demand update message such as an UPDATE or REINVITE message and send the message to the server performing the CF.

Processes 1004 to 1005: The server performing the CF records the received shared port number, assigns a port number corresponding to the shared port number, and returns the port number to the server performing the PF.

Process 1006: The server performing the CF and the server performing the PF respectively record the port numbers assigned by themselves and the corresponding port numbers assigned in the opposing parties, establish a new shared connection corresponding to the UE according to the port numbers assigned by themselves.

When the server performing the CF determines to update the shared connection as receiving the media capability demand update message of the UE sent from the server performing the PF, the processing method for which is similar to the one shown in Figure 10 and is described as follows.

Process 71: The server performing the CF current receives media capability demand update messages sent from servers performing the PF and determines the server performing the PF that the UE accesses and the media capability demand of the UE.

Process 72: The server performing the CF determines the same media capability demand of the UE and the other UEs, determines the shared connection corresponding to the current same media capability demand of the UE, judges whether the same media capability demand corresponds to an existing shared connection in the server performing the PF. If the same media capability demand corresponds to an existing shared connection, the server performing the CF notifies the server performing the PF of updating the shared connection corresponding to the UE. The server performing the PF removes the information of the UE from the information of the existing shared connection corresponding to the UE, adds the information of the UE into the information of the shared connection corresponding to the current same media capability demand of the UE, and terminates this procedure. If the same media capability demand does not correspond to the existing shared connection, the server performing the CF assigns a new shared port number to the current same media capability demand of the UE and then performs Process 73.

In this process, it is further required to judge whether the UE is the last UE corresponding to the shared connection, when the information of the UE is removed from the information of the existing shared connection corresponding to the UE. If the UE is the last UE corresponding to the shared connection, the shared connection is released when removing the information of the UE. If the UE is not the last UE corresponding to the shared connection, merely the information of the UE is removed.

Process 73: The server performing the CF transmits the assigned shared port number to the server performing the PF. The server performing the PF records the received shared port number, assigns a port number corresponding to the received shared port number, and returns the port number to the server performing the CF.

Process 74: The server performing the CF and the server performing the PF respectively record the port numbers assigned by themselves and the corresponding port numbers assigned in the opposing parties, and establish a new shared connection corresponding to the UE according to the port numbers assigned by themselves.

Figure 11 shows a schematic flow chart of a method for updating a shared connection according to another embodiment of the present invention. In this embodiment, a server performing the PF determines to update a shared connection as receiving a media capability demand update message of a UE. Moreover, this embodiment is merely a specific example of updating a shared connection shown in Figure 10 and is on premises of establishing a shared connection with the sub-session method shown in Figure 8. As shown in Figure 11, the detailed processing includes the following processes.

Process 1101: A server performing the PF receives a media capability demand update message of a UE.

Process 1102: The server performing the PF determines the same media capability demand of the UE and the other UEs according to the received media capability demand update message, further determines a sub-session corresponding to the same media capability demand, judges whether the same media capability demand corresponds to an existing sub-session. If the same media capability demand corresponds to an existing sub-session, the server performing the PF updates the sub-session corresponding to the UE, removes the information of the UE from the information of the existing sub-session corresponding to the UE, adds the information of the UE into the information of the sub-session corresponding to the current same media capability demand of the UE, and terminates this procedure. If the same media capability demand does not correspond to an existing sub-session, the server performing the PF establishes a new sub-session for the current same media capability demand of the UE, assigns a new port number of the sub-session, and then performs Process 1103.

In this process, it is further required to judge whether the UE is the last UE corresponding to the shared connection, when the information of the UE is removed from the information of the existing shared connection corresponding to the UE. If the UE is the last UE corresponding to the shared connection, the shared connection is released when removing the information of the UE. If the UE is not the last UE corresponding to the shared connection, merely the information of the UE is removed.

Process 1103: The server performing the PF transmits the port number of the sub-session assigned and the information of the sub-session newly-established in Process 1102 to a server performing the CF.

Process 1104 - Process 1105: The server performing the CF records the received port number of the sub-session and the information of the sub-session, establishes a sub-session according to the information of the sub-session and associates the sub-session with the current session, assigns a port number of the sub-session corresponding to the received port number of the sub-session, and returns the port number of the sub-session to the server performing the PF.

Process 1106: The server performing the CF and the server performing the PF respectively record the port numbers of the sub-session assigned by themselves and the corresponding port numbers of the sub-session assigned in the opposing parties, and establish a shared connection of the newly-established sub-session to which the UE belongs according to the port numbers of the sub-session assigned by themselves.

When the server performing the CF determines to update the shared connection as receiving the media capability demand update message of the UE sent from the server performing the PF, the processing method for which is similar to the one shown in Figure 11 and is described as follows.

Process 81: The server performing the CF current receives media capability demand update messages sent from servers performing the PF and determines the server performing the PF that the UE accesses and the media capability demand of the UE.

Process 82: The server performing the CF determines a sub-session corresponding to the same media capability demand of the UE, judges whether the same media capability demand corresponds to an existing sub-session in the server performing the PF. If the same media capability demand corresponds to an existing sub-session, the server performing the C notifies the server performing the PF of updating the sub-session to which the UE belongs. The server performing the PF removes the information of the UE from the information of the existing sub-session to which the UE belongs, adds the information of the UE into the information of the sub-session corresponding to the current same media capability demand of the UE, and terminates this procedure. If the same media capability demand does not correspond to an existing sub-session, the server performing the CF establishes a new sub-session for the current same media capability demand of the UE, associates the sub-session and the current session, and assigns a port number to the newly-established sub-session, and then performs Process 83.

In this process, it is further required to judge whether the UE is the last UE corresponding to the shared connection, when the information of the UE is removed from the information of the existing shared connection corresponding to the UE. If the UE is the last UE corresponding to the shared connection, the shared connection is released when removing the information of the UE. If the UE is not the last UE corresponding to the shared connection, merely the information of the UE is removed.

Process 83: The server performing the CF transmits the information of the newly-established sub-session and the assigned port number of the sub-session to the server performing the PF. The server performing the PF records the received information of the sub-session and the port number of the sub-session, assigns a port number of the sub-session corresponding to the received port number of the sub-session, and returns the port number of the sub-session to the server performing the CF.

Process 84: The server performing the CF and the server performing the PF respectively record the port numbers of the sub-session assigned by themselves and the corresponding port numbers of the sub-session assigned in the opposing parties, and establish a shared connection of the newly-established sub-session to which the UE belongs according to the port numbers of the sub-session assigned by themselves.

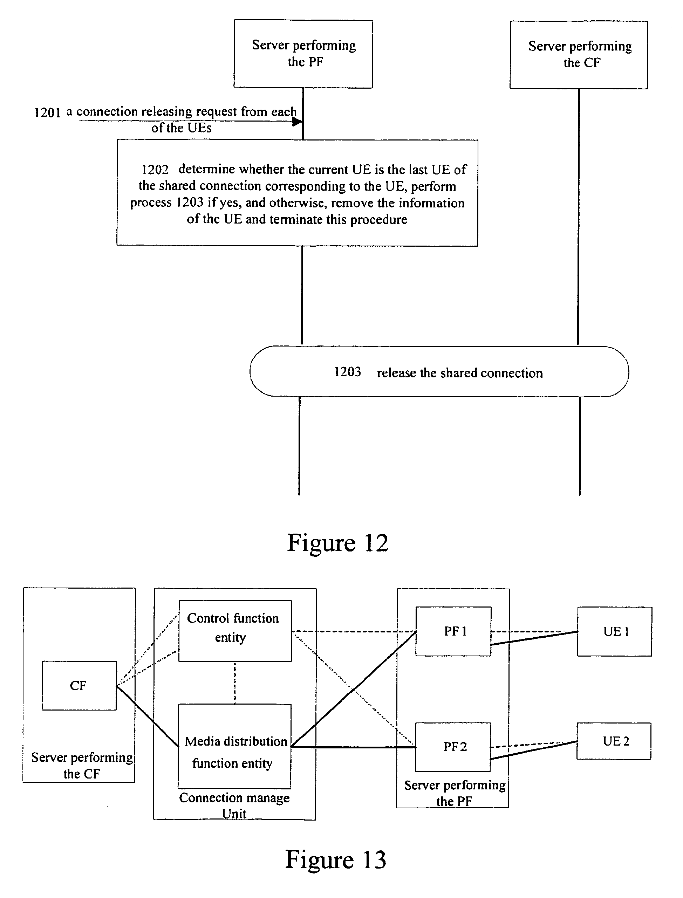

Figure 12 shows a schematic flow chart of a method for releasing a shared connection according to an embodiment of the present invention. In this embodiment, a server performing the PF determines to release a shared connection when receiving a connection release request sent from a UE. As shown in Figure 12, the detailed processing includes the following processes.

Process 1201: A server performing the PF receives a connection release request sent from a UE. The connection release request may be a BYE message in the SIP.

Process 1202: The server performing the PF determines the shared connection corresponding to the UE, judges whether the UE is the last UE corresponding to the shared connection. If the UE is the last UE corresponding to the shared connection, performs Process 1203. If the UE is not the last UE corresponding to the shared connection, the server performing the PF removes the information of the UE from the information of the shared connection and terminates this procedure.

Process 1203: The server performing the PF and the server performing the CF release the shared connection. The specific processing details of releasing the shared connection is not the contents to which the embodiment of the present invention refers and may be implemented according to a conventional protocol, and is not described herein.

When the server performing the CF determines to release the shared connection after receiving the connection release request of the UE sent from the server performing the PF, the server performing the CF determines the shared connection corresponding to the UE, judges whether the UE is the last UE corresponding to the shared connection. If the UE is the last UE corresponding to the shared connection, the server performing the CF and the server performing the PF release the shared connection. If the UE is not the last UE corresponding to the shared connection, the server performing the CF notifies the server performing the PF of removing the information of the UE. The server performing the PF removes the information of the UE from the information of the shared connection.

The present invention also provides a system for establishing a connection for a multi-party communication service according to the above methods of the present invention. In the system, a connection managing unit is set between an existing server performing the CF and an existing server performing the PF to instruct the server performing the CF and the server performing the PF to establish a shared connection for at least one UE participating in the current session and accessing the server performing the PF. The connection managing unit may include entities on two planes, i.e. Control Function entity on the signaling plane and Media Distribution Function entity on the data plane.

Figure 13 shows a schematic diagram illustrating the structure of a system according to an embodiment of the present invention. As shown in Figure 13, the system provided by the embodiment of the present invention includes a server performing the CF, a server performing the PF and a connection managing unit. The connection managing unit includes a Control Function entity and a Media Distribution Function entity. In this embodiment, it is supposed that there are two UEs, i.e. UE1 and UE2 participating in the current session and accessing the server performing the PF. PF1 and PF2 for dealing with the signal and media data of UE1 and UE2 in the processes of the session are respectively assigned to UE1 and UE2 in the server performing the PF. A CF is assigned to the current session in the server performing the CF to deal with the signal and media data of the current session. As shown in Figure 13, a dotted line denotes a connection on the signaling plane while a solid line denotes a connection on the data plane.

On the signaling plane, UE1 and UE2 interact with the Control Function entity respectively via PF1 and PF2 in the server performing the PF. The Control Function entity further interacts with the CF in the server performing the CF. For example, the Control Function entity resolves a received connection establishing signal after receiving the connection establishing signal sent from the server performing the PF or the server performing the CF, determines to establish a shared connection for UE1 and UE2, and sends a connection establishing signal to the server performing the CF to notify the server performing the CF to establish a shared connection between the Control Function entity and the server performing the CF. The shared connection is established for UE1 and UE2 participating in the current session and accessing the server performing the PF. The Control Function entity also issues, according to the connection establishing signal sent from the server performing the PF or the server performing the CF, a managing command to the Media Distribution Function entity to notify the Media Distribution Function entity of the shared connection that the Media Distribution Function entity adopts to transmit the media data, and to instruct the Media Distribution Function entity in configuring the function of replicating and distributing the media data of the Media Distribution Function entity. For example, the Control Function entity notifies the Media Distribution Function entity of receiving the media data via the shared connection of UE1 and UE2, and configuring the replicating and distributing function of the Media Distribution Function entity. The replicating and distributing function is configured as replicating the media data twice and sending the copies to UE1 and UE2 respectively via PF1 and PF2.

On the data plane, the Media Distribution Function entity receives the media data from the CF with the shared connection established between the Media Distribution Function entity and the server performing the CF, replicates the received media data according to the configured function of replicating and distributing the media data, and sends the media data to UE1 and UE2 respectively via PF1 and PF2. Moreover, not only the downlink data from the server performing the CF to Media Distribution Function entity may be transmitted with the shared connection, but also the uplink data from the server performing the PF to the Media Distribution Function entity may be transmitted with the shared connection. The Media Distribution Function entity may be further configured to receive media data from the server performing the PF and forwarding the media data to the server performing the CF via the shared connection.

The method for establishing a shared connection for at least one UE participating in the current session and accessing the same server performing the PF is identical with the corresponding method provided by the embodiment of the present invention. The method includes establishing a shared connection for a part or all of the UEs participating in the current session and accessing the same server performing the PF, or establishing a shared connection for the UEs having the same media capability demand of the UEs participating in the current session and accessing the same server performing the PF.

When receiving a connection establishing signal sent from the server performing the PF or the server performing the CF, the Control Function entity may assign a shared port number for establishing a shared connection, notify the server performing the CF and the Media Distribution Function entity of the assigned shared port number. Therefore, the server performing the CF may use the shared connection according to the shared port number to transmit media data, and the Media Distribution Function entity may receive the media data sent from the shared connection according to the shared port number, replicates and distributes the media data. The method for the Control Function entity to assign a shared port number and establish a shared connection may be referred to embodiments mentioned above and may not be described herein. In addition, the Control Function entity may be an entity set separately, or be integrated into the server performing the CF or the server performing the PF. The Media Distribution Function entity may be set separately or be integrated into the server performing the PF.

When the server performing the CF is required to communicate with multiple servers performing the PF in a service session, each of the servers performing the PF may access at least one Media Distribution Function entity corresponding to the server performing the PF. The system may further include multiple Media Distribution Function entities and each of the Media Distribution Function entities may access at least one server performing the PF. Multiple Control Function entities may be set as demanded and each of the Control Function entities may access at least one server performing the PF, and each of the servers performing the PF may access at least one Control Function entities. A Control Function entity may also access at least one Media Distribution Function entities while each of the Media Distribution Function entities may also access at least one Control Function entity. For a server performing the CF and a server performing the PF, the connection relation and operation principle between the two and Media Distribution Function entities and Control Function entities are the same as that shown in Figure 13 no matter which connection method the system of the present invention adopts. And the connection methods will not be described one by one herein but all should be covered by the protection scope of the present invention.

As can be seen from the above structure of the system of the present invention, a shared connection is established between the connection managing unit and the server performing the CF, which greatly lightens the burden on the media processing of the server performing the CF. Therefore, the process of media data such as replication, distribution and media format conversion may be shifted to the connection managing unit, which is favorable for implementing and expanding other functions of the server performing the CF and is also beneficial to expand the capacity of the whole network. When the Media Distribution Function entity in the connection managing unit is integrated into the server performing the PF, the shared connection is established between the server performing the CF and the server performing the PF.

In the above embodiments, the server performing the PF may be a PoC server performing the PF while the server performing the CF may be a PoC server performing the CF; or the server performing the PF may be a Conference server performing the PF while the server performing the CF may be a Conference server performing the CF. The specific entities indicated by the access server, centralized managing server, server performing the PF and server performing the CF are not limited in the present invention but all should be covered by the protection scope of the present invention.

To sum up, with the method and system of the present invention, redundant media transmission of flow between the server performing the PF and the server performing the CF may be avoided significantly. The media flow is not transmitted with a terminal as a unit any longer, but is transmitted with a server performing the PF, a sub-session; or the same media capability demand in a server performing the PF as the granularity. Therefore, extending functions such as transmitting media data in types may be further implemented, which is favorable for the further development of the multi-party communication service.

The above are only preferred embodiments of the present invention and are not for use in limiting the protection scope of the present invention. Any modification, equivalent replacement and improvement made under the spirit and principle of the present invention should be included in the protection scope thereof.

## Claims

1. A method for establishing a connection for a Push-to-Talk over Cellular, PoC, service, comprising:
receiving (202), by a Participating PoC Server performing participating function, connection establishing requests sent from at least two UEs accessing the Participating PoC Server;
establishing (206), by a Controlling PoC Server performing controlling function and the Participating PoC Server, a shared connection between the Controlling PoC Server and the Participating PoC Server, wherein the shared connection is configured to transmit media data of the PoC service for the at least two UEs accessing the Participating PoC Server; and
transmitting (207), by the Controlling PoC Server and the Participating PoC Server, the media data of the PoC service between the Controlling PoC Server and the Participating PoC Server via the shared connection.

2. The method of Claim 1, wherein the at least two UEs accessing the Participating PoC Server comprise a part or all of UEs participating in the current session and accessing the Participating PoC Server.

3. The method of Claim 2, wherein establishing the shared connection comprises one of:
(a) establishing, by the Participating PoC Server and the Controlling PoC Server, one connection for each of UEs participating in a session and accessing the Participating PoC Server, and establishing a new connection as the shared connection for the at least two UEs accessing the Participating PoC Server and participating in the session; and
(b) determining, by the Controlling PoC Server, Participating PoC Servers that UEs participating in the session access, establishing, by the Controlling PoC Server and the each of the Participating PoC Servers, one connection for each of the UEs participating in the session, and establishing (306), by the Controlling PoC Server and each of the Participating PoC Servers, a new connection as the shared connection for the at least two UEs accessing the Participating PoC Server and participating in the session.

4. The method of Claim 2, wherein establishing the shared connection comprises one of:
(a) establishing, by the Participating PoC Server and the Controlling PoC Server, one connection for each of UEs accessing the Participating PoC Server and participating in the session; selecting, by the Participating PoC Server, one of the established connections as the shared connection for the at least two UEs participating in the session and accessing the Participating PoC Server; and
(b) determining, by the Controlling PoC Server, Participating PoC Servers that UEs participating in the session access, establishing, by the Controlling PoC Server and each of the Participating PoC Servers, one connection for each of the UEs participating in the session, and selecting, by the Controlling PoC Server and each of the Participating PoC Servers, one of the connections established as the shared connection for the at least two UEs accessing the Participating PoC Server and participating in the session.

5. The method of Claim 2, wherein establishing the shared connection comprises one of:
(a) establishing, by the Participating PoC Server and the Controlling PoC Server, the shared connection for the at least two UEs accessing the Participating PoC Server and participating in the session; and
(b) determining, by the Controlling PoC Server, Participating PoC Servers that UEs participating in the session access, and establishing (406), by the Controlling PoC Server and each of the Participating PoC Servers, the shared connection for the at least two UEs accessing the Participating PoC Server and participating in the session.

6. The method of Claim 5, wherein
establishing, by the Participating PoC Server and the Controlling PoC Server, the shared connection for the at least two UEs accessing the Participating PoC Server and participating in the session comprises:
establishing (402), by the Participating PoC Server, a sub-session for the at least two UEs accessing the Participating PoC Server and participating in the session, and establishing, by the Participating PoC Server and the Controlling PoC Server, a connection for the sub-session as the shared connection of the at least two UEs; and
establishing, by the Controlling PoC Server and each of the Participating PoC Servers, the shared connection for the at least two UEs participating in the session and accessing the Participating PoC Server comprises:
establishing, by the Controlling PoC Server and each of the Participating PoC Servers, a sub-session for the at least two UEs accessing the Participating PoC Server and participating in the session, and establishing (406) a connection for the sub-session as the shared connection of the at least two UEs.

7. The method of Claim 1, wherein establishing the shared connection comprises:
establishing (606) the shared connection for the at least two UEs participating in the session, accessing the Participating PoC Server, and having the same media capability demand.

8. The method of Claim 7, wherein establishing the shared connection comprises one of:
(a) establishing, by the Participating PoC Server and the Controlling PoC Server, a connection for each of UEs accessing the Participating PoC Server and participating in the session; determining, by the Participating PoC Server, various media capability demands of the UEs accessing the Participating PoC Server, and establishing, by the Participating PoC Server and the Controlling PoC Server, a new connection as the shared connection for the at least two UEs participating in the session, accessing the Participating PoC Server, and with the same media capability demand; and
(b) determining, by the Controlling PoC Server, Participating PoC Servers that UEs participating in the session access, establishing, by the Controlling PoC Server and each of the Participating PoC Servers, a connection for each of the UEs participating in the session, determining, by the Controlling PoC Server, various media capability demands of UEs accessing the Participating PoC Server and participating in the session, and establishing (706), by the Controlling PoC Server and the Participating PoC Server, a new connection as the shared connection for the at least two UEs participating in the session, accessing the Participating PoC Server, and with the same media capability demand.

9. The method of Claim 7, wherein establishing the shared connection comprises one of:
(a) establishing, by the Participating PoC Server and the Controlling PoC Server, a connection for each of UEs accessing the Participating PoC Server and participating in the session; determining, by the Participating PoC Server, various media capability demands of the UEs accessing the Participating PoC Server and participating in the session, and selecting one of the connections established as the shared connection for the at least two UEs participating in the session, accessing the Participating PoC Server, and with the same media capability demand; and
(b) determining, by the Controlling PoC Server, Participating PoC Servers that UEs participating in the session access, establishing (806), by the Controlling PoC Server and each of the Participating PoC Servers, one connection for each of the UEs participating in the session, determining various media capability demands of UEs accessing the Participating PoC Server and participating in the session, and selecting one of the connections established as the shared connection for the at least two UEs participating in the session, accessing the Participating PoC Server, and with the same media capability demand.

10. The method of Claim 9,
wherein selecting, by the Participating PoC Server, one connection from the connections established for each of the media capability demands comprises one of: arbitrarily selecting one connection from the connections established for the UEs accessing the Participating PoC Server; and arbitrarily selecting one connection from the connections established for the at least two UEs participating in the session and having the same media capability demand; and
selecting, by the Controlling PoC Server, one connection from the connections established for each of the media capability demands comprises one of: arbitrarily selecting one connection from the connections established for the UEs accessing the Participating PoC Server; and arbitrarily selecting one connection from the connections established for the at least two UEs accessing the Participating PoC Server and having the same media capability demand.

11. The method of any of Claims 3, 4, 8-10, further comprising setting the properties of connections as one of:
(a) setting the property of the shared connection as Send Only, and setting the properties of connections other than the shared connection as Receive Only for the Controlling PoC Server;
(b) setting the property of the shared connection as Receive Only, and setting the properties of connections other than the shared connection as Send Only for the Participating PoC Server; and
(c) setting the property of the shared connection as Send and Receive.

12. The method of any of Claims 3, 4, 8- 10, further comprising setting the properties of connections as one of;
(a) setting the property of the shared connection as Active, and setting the properties of connections other than the shared connection as Inactive or Active; and
(b) setting the property of the shared connection as Send and Receive and Active, and setting the properties of connections other than the shared connection as Inactive.

13. The method of Claim 7, wherein establishing the shared connection comprises one of:
(a) determining, by the Participating PoC Server, various media capability demands of UEs accessing the Participating PoC Server and participating in the session, and establishing, by the Participating PoC Server and the Controlling PoC Server , a new connection as the shared connection of the at least two UEs participating in the session, accessing the Participating PoC Server, and with the same media capability demand; and
(b) determining, by the Controlling PoC Server, Participating PoC Servers that UEs participating in the session access, determining, by the Controlling PoC Server, various media capability demands of UEs accessing the Participating PoC Server and participating in the session for each of the Participating PoC Servers, and establishing (1006), by the Controlling PoC Server and each of the Participating PoC Servers, a new connection as the shared connection of the at least two UEs participating in the session, accessing the Participating PoC Server, and with the same media capability demand.

14. The method of Claim 13, wherein
establishing, by the Participating PoC Server and the Controlling PoC Server , a new connection as the shared connection for the at least two UEs participating in the session, accessing the Participating PoC Server, and with the same media capability demand comprises: establishing, by the Participating PoC Server, a sub-session for the at least two UEs participating in the session, accessing the Participating PoC Server, and having the same media capability demand, and establishing, by the Participating PoC Server and the Controlling PoC Server, a connection for the sub-session as the shared connection of the at least two UEs belonging to the sub-session; and
establishing, by the Controlling PoC Server and each of the Participating PoC Servers, a new connection as the shared connection of the at least two UEs participating in the session, accessing the Participating PoC Server, and having the same media capability demand comprises: establishing, by the Controlling PoC Server , a sub-session for the at least two UEs having the media capability demand, and establishing (1106), by the Controlling PoC Server and the Participating PoC Server, a connection for the sub-session as the shared connection of the at least two UEs participating in the session, accessing the Participating PoC Server, and belonging to the sub-session.

15. The method of Claim 14, further comprising:
determining, by the Controlling PoC Server or the Participating PoC Server of a UE, a media capability demand shared by the UE and other UEs when the original media capability demand of the UE changes, judging whether a sub-session corresponding to the media capability demand shared by the UE and other UEs has been established in the Participating PoC Server of the UE, and if the sub-session has been established, adding the UE into the sub-session; if the sub-session has not been established, establishing a sub-session for the media capability demand shared by the UE and other UEs, adding the UE into the established sub-session, and establishing a shared connection for the sub-session.

16. The method of Claim 15, further comprising:
determining (1202), by the Controlling PoC Server or the Participating PoC Server of the UE, the original sub-session to which the UE belongs, judging (1202) whether the UE is the last UE of the original sub-session to which the UE belongs, and if the UE is the last UE of the original sub-session to which the UE belongs, releasing (1203) the original sub-session to which the UE belongs and the shared connection corresponding to the sub-session; if the UE is the not last UE of the original sub-session to which the UE belongs, reserving the original sub-session to which the UE belongs.

17. The method of any of Claims 8- 10 and 13, further comprising:
determining, by the Controlling PoC Server or the Participating PoC Server of a UE, a media capability demand shared by the UE and other UEs when the original media capability demand of the UE changes, judging whether a connection corresponding to the media capability demand shared by the UE and other UEs has been established in the Participating PoC Server of the UE, and if the connection has been established, adding the UE into the connection corresponding to the media capability demand shared by the UE and other UEs; if the connection has not been established, establishing a new connection for the media capability demand shared by the UE and other UEs and adding the UE into the newly established connection.

18. The method of Claim 17, further comprising:
determining, by the Controlling PoC Server or the Participating PoC Server of the UE, the original connection corresponding to the UE, judging (1202) whether the UE is the last UE corresponding to the connection, and if the UE is the last UE corresponding to the connection, releasing (1203) the original connection corresponding to the UE; if the UE is not the last UE corresponding to the connection, reserving the original connection corresponding to the UE.

19. The method of any of Claims 1-10, 13 and 14, further comprising:
determining, by the Controlling PoC Server or the Participating PoC Server of a UE, the shared connection corresponding to the UE when the UE quits the session, judging (1202) whether the UE is the last UE of the shared connection, and if the UE is the last UE of the shared connection, releasing (1203) the shared connection; if the UE is not the last UE of the shared connection, quitting, by the UE, the shared connection and reserving the shared connection.

20. The method of any of Claims 7-10, 13-16, wherein the media capability demand comprises at least one of: media type, encoding and decoding format, media data encapsulation protocol and bandwidth; and
the same media capability demand is any or any combination of the same items in the media capability demand of each of the UEs.

21. The method of Claim 2, wherein establishing the shared connection between the Controlling PoC Server and the Participating PoC Server comprises:
establishing, by the Participating PoC Server, the shared connection between the Participating PoC Server and the Controlling PoC Server;
the method further comprises:
receiving media data sent from the Controlling PoC Server via the shared connection; and
transmitting the media data to at least two UEs which access the Participating PoC Server.

22. The method of Claim 21, wherein establishing, by the Participating PoC Server, the shared connection between the Participating PoC Server and the Controlling PoC Server comprises:
establishing, by the Participating PoC Server, the shared connection for the at the least two UEs participating in the session, accessing the Participating PoC Server, and having the same media capability demand between the Participating PoC Server and the Controlling PoC Server.

23. A system for establishing a connection for a Push-to-Talk over Cellular, PoC, service, comprising: a Controlling PoC Server performing controlling function and a Participating PoC Server performing participating function, wherein
the Participating PoC Server receives connection establishing requests sent from at least two UEs accessing the Participating PoC Server;
the Controlling PoC Server and the Participating PoC Server are configured to establish a shared connection between the Controlling PoC Server and the Participating PoC Server, wherein the shared connection is configured to transmit media data of the PoC service for the at least two UEs accessing the Participating PoC Server; and
the Controlling PoC Server and the Participating PoC Server are further configured to transmit the media data of the PoC service between the Controlling PoC Server and the Participating PoC Server via the shared connection.

24. The system of Claim 23, wherein
the Controlling PoC Server is further configured to determine Participating PoC Servers that UEs participating in the session access, establish a shared connection for at least two UEs accessing the Participating PoC Server and participating in the session between the Controlling PoC Server and each of the Participating PoC Servers and send a notification of the shared connection to the Participating PoC Server; and
the Participating PoC Server is further configured to receive the notification sent from the Controlling PoC Server.

25. The system of Claim 23, wherein
the Participating PoC Server is further configured to determine at least two UEs accessing the Participating PoC Server and participating in the session, establish a shared connection for at least two UEs accessing the Participating PoC Server and the participating in the session between the Participating PoC Server and the Controlling PoC Server, and send a notification of the shared connection to the Controlling PoC Server; and
the Controlling PoC Server is configured to determine the shared connection established between the Controlling PoC Server and the Participating PoC Server according to the notification sent form the connection managing unit.

26. The system of Claim 23, further comprising:
the connection managing unit, configured to establish a shared connection for at least two UEs accessing the Participating PoC Server and participating in the session between the connection managing unit and the Controlling PoC Server and send a notification of the shared connection to the Controlling PoC Server, and establish a connection for each of UEs participating in the session between the connection managing unit and the Participating PoC Server; and
the Controlling PoC Server is configured to determine the shared connection established between the Controlling PoC Server and the Participating PoC Server according to the notification sent form the connection managing unit.

27. A Participating Push-to-Talk over Cellular, PoC, Server, comprising:
means, configured to receive connection establishing requests sent from at least two UEs accessing the Participating PoC Server;
means, configured to establish a shared connection between the Participating PoC Server and a Controlling PoC Server; wherein the shared connection is configured to transmit media data of PoC service for the at least two UEs accessing the Participating PoC Server; and
means, configured to transmit the media data of the PoC service between the Controlling PoC Server and the Participating PoC Server via the shared connection.

28. A Controlling Push-to-Talk over Cellular, PoC, Server, comprising:
means, configured to establish a shared connection between the Controlling PoC Server and an Participating PoC Server; wherein the shared connection is configured to transmit media data of PoC service for at least two UEs accessing the Participating PoC Server, and
means, configured to transmit the media data of the PoC service between the Controlling PoC Server and the Participating PoC Server via the shared connection.

## Patentansprüche

1. Verfahren zum Einrichten einer Verbindung für einen Zellen-Push-to-Talk-Dienst (PoC-Dienst), das Folgendes umfasst:
Empfangen (202) von Verbindungseinrichtungsanforderungen, die von wenigstens zwei UEs gesendet werden, die auf den teilnehmenden PoC-Server zugreifen, durch einen teilnehmenden PoC-Server, der Teilnahmefunktionen ausführt;
Einrichten (206) einer gemeinsam genutzten Verbindung zwischen dem steuernden PoC-Server und dem teilnehmenden PoC-Server durch einen steuernden PoC-Server, der eine Steuerungsfunktion ausführt, und den teilnehmenden PoC-Server, wobei die gemeinsam genutzte Verbindung eingerichtet ist, um Mediendaten des PoC-Dienstes für die wenigstens zwei UEs, die auf den teilnehmenden PoC-Server zugreifen, zu übertragen; und
Übertragen (207) der Mediendaten des PoC-Dienstes zwischen dem steuernden PoC-Server und dem teilnehmenden PoC-Server über die gemeinsam genutzte Verbindung durch den steuernden PoC-Server und den teilnehmenden PoC-Server.

2. Verfahren nach Anspruch 1, wobei die wenigstens zwei UEs, die auf den teilnehmenden PoC-Server zugreifen, einen Teil der UEs oder alle UEs, die an der gegenwärtigen Sitzung teilnehmen und auf den teilnehmenden PoC-Server zugreifen, umfassen.

3. Verfahren nach Anspruch 2, wobei das Einrichten der gemeinsam genutzten Verbindung Folgendes umfasst:
(a) Einrichten einer Verbindung für jede der UEs, die an einer Sitzung teilnehmen und auf den teilnehmenden PoC-Server zugreifen, durch den teilnehmenden PoC-Server und den steuernden PoC-Server und Einrichten einer neuen Verbindung als die gemeinsam genutzte Verbindung für die wenigstens zwei UEs, die auf den teilnehmenden PoC-Server zugreifen und an der Sitzung teilnehmen; oder
(b) Bestimmen von teilnehmenden PoC-Servern, auf die UEs zugreifen, die an der Sitzung teilnehmen, durch den steuernden PoC-Server, Einrichten einer Verbindung für jede der UEs, die an der Sitzung teilnehmen, durch den steuernden PoC-Server und jeden der teilnehmenden PoC-Server und Einrichten (306) einer neuen Verbindung als die gemeinsam genutzte Verbindung für die wenigstens zwei UEs, die auf den teilnehmenden PoC-Server zugreifen und an der Sitzung teilnehmen, durch den steuernden PoC-Server und jeden der teilnehmenden PoC-Server.

4. Verfahren nach Anspruch 2, wobei das Einrichten der gemeinsam genutzten Verbindung Folgendes umfasst:
(a) Einrichten einer Verbindung für jede der UEs, die auf den teilnehmenden PoC-Server zugreifen und an der Sitzung teilnehmen, durch den teilnehmenden PoC-Server und den steuernden PoC-Server; Auswählen einer der eingerichteten Verbindungen als die gemeinsam genutzte Verbindung für die wenigstens zwei UEs, die an der Sitzung teilnehmen und auf den teilnehmenden PoC-Server zugreifen, durch den teilnehmenden PoC-Server; oder
(b) Bestimmen von teilnehmenden PoC-Servern, auf die UEs zugreifen, die an der Sitzung teilnehmen, durch den steuernden PoC-Server, Einrichten einer Verbindung für jede der UEs, die an der Sitzung teilnehmen, durch den steuernden PoC-Server und jeden der teilnehmenden PoC-Server und Auswählen einer der eingerichteten Verbindungen als die gemeinsam genutzte Verbindung für die wenigstens zwei UEs, die auf den teilnehmenden PoC-Server zugreifen und an der Sitzung teilnehmen, durch den steuernden PoC-Server und jeden der teilnehmenden PoC-Server.

5. Verfahren nach Anspruch 2, wobei das Einrichten der gemeinsam genutzten Verbindung Folgendes umfasst:
(a) Einrichten der gemeinsam genutzten Verbindung für die wenigstens zwei UEs, die auf den teilnehmenden PoC-Server zugreifen und an der Sitzung teilnehmen, durch den teilnehmenden PoC-Server und den steuernden PoC-Server; oder
(b) Bestimmen von teilnehmenden PoC-Servern, auf die UEs zugreifen, die an der Sitzung teilnehmen, durch den steuernden PoC-Server, und Einrichten (406) der gemeinsam genutzten Verbindung für die wenigstens zwei UEs, die auf den teilnehmenden PoC-Server zugreifen und an der Sitzung teilnehmen, durch den steuernden PoC-Server und jeden der teilnehmenden PoC-Server.

6. Verfahren nach Anspruch 5, wobei
das Einrichten der gemeinsam genutzten Verbindung für die wenigstens zwei UEs, die auf den teilnehmenden PoC-Server zugreifen und an der Sitzung teilnehmen, durch den teilnehmenden PoC-Server und den steuernden PoC-Server Folgendes umfasst:
Einrichten (402) einer Untersitzung für die wenigstens zwei UEs, die auf den teilnehmenden PoC-Server zugreifen und an der Sitzung teilnehmen, durch den teilnehmenden PoC-Server und Einrichten einer Verbindung für die Untersitzung als die gemeinsam genutzte Verbindung für die wenigstens zwei UEs durch den teilnehmenden PoC-Server und den steuernden PoC-Server; und
das Einrichten der gemeinsam genutzten Verbindung für die wenigstens zwei UEs, die an der Sitzung teilnehmen und auf den teilnehmenden PoC-Server zugreifen, durch den steuernden PoC-Server und jeden der teilnehmenden PoC-Server Folgendes umfasst:
Einrichten einer Untersitzung für die wenigstens zwei UEs, die auf den teilnehmenden PoC-Server zugreifen und an der Sitzung teilnehmen, durch den steuernden PoC-Server und jeden der teilnehmenden PoC-Server und Einrichten (406) einer Verbindung für die Untersitzung als die gemeinsam genutzte Verbindung der wenigstens zwei UEs.

7. Verfahren nach Anspruch 1, wobei das Einrichten der gemeinsam genutzten Verbindung Folgendes umfasst:
Einrichten (606) der gemeinsam genutzten Verbindung für die wenigstens zwei UEs, die an der Sitzung teilnehmen, auf den teilnehmenden PoC-Server zugreifen und die gleiche Medienkapazitätsforderung aufweisen.

8. Verfahren nach Anspruch 7, wobei das Einrichten der gemeinsam genutzten Verbindung Folgendes umfasst:
(a) Einrichten einer Verbindung für jede der UEs, die auf den teilnehmenden PoC-Server zugreifen und an der Sitzung teilnehmen, durch den teilnehmenden PoC-Server und den steuernden PoC-Server; Bestimmen von verschiedenen Medienkapazitätsforderungen der UEs, die auf den teilnehmenden PoC-Server zugreifen, durch den teilnehmenden PoC-Server; und Einrichten einer neuen Verbindung als die gemeinsam genutzte Verbindung für die wenigstens zwei UEs, die an der Sitzung teilnehmen, auf den teilnehmenden PoC-Server zugreifen und die gleiche Medienkapazitätsforderung aufweisen, durch den teilnehmenden PoC-Server und den steuernden PoC-Server; oder
(b) Bestimmen von teilnehmenden PoC-Servern, auf die UEs zugreifen, die an der Sitzung teilnehmen, durch den steuernden PoC-Server, Einrichten einer Verbindung für jede der UEs, die an der Sitzung teilnehmen, durch den steuernden PoC-Server und jeden der teilnehmenden PoC-Server, Bestimmen von verschiedenen Medienkapazitätsforderungen von UEs, die auf den teilnehmenden PoC-Server zugreifen und an der Sitzung teilnehmen, durch den steuernden PoC-Server, und Einrichten (706) einer neuen Verbindung als die gemeinsam genutzte Verbindung für die wenigstens zwei UEs, die an der Sitzung teilnehmen, auf den teilnehmenden PoC-Server zugreifen und die gleiche Medienkapazitätsforderung aufweisen, durch den steuernden PoC-Server und den teilnehmenden PoC-Server.

9. Verfahren nach Anspruch 7, wobei das Einrichten der gemeinsam genutzten Verbindung Folgendes umfasst:
(a) Einrichten einer Verbindung für jede der UEs, die auf den teilnehmenden PoC-Server zugreifen und an der Sitzung teilnehmen, durch den teilnehmenden PoC-Server und den steuernden PoC-Server; Bestimmen von verschiedenen Medienkapazitätsforderungen der UEs, die auf den teilnehmenden PoC-Server zugreifen und an der Sitzung teilnehmen, durch den teilnehmenden PoC-Server; und Auswählen einer der eingerichteten Verbindungen als die gemeinsam genutzte Verbindung für die wenigstens zwei UEs, die an der Sitzung teilnehmen, auf den teilnehmenden PoC-Server zugreifen und die gleiche Medienkapazitätsforderung aufweisen; oder
(b) Bestimmen von teilnehmenden PoC-Servern, auf die UEs zugreifen, die an der Sitzung teilnehmen, durch den steuernden PoC-Server, Einrichten (806) einer Verbindung für jede der UEs, die an der Sitzung teilnehmen, durch den steuernden PoC-Server und jeden der teilnehmenden PoC-Server, Bestimmen verschiedener Medienkapazitätsforderungen von UEs, die auf den teilnehmenden PoC-Server zugreifen und an der Sitzung teilnehmen, und Auswählen einer der eingerichteten Verbindungen als die gemeinsam genutzte Verbindung für die wenigstens zwei UEs, die an der Sitzung teilnehmen, auf den teilnehmenden PoC-Server zugreifen und die gleiche Medienkapazitätsforderung aufweisen.

10. Verfahren nach Anspruch 9,
wobei das Auswählen einer Verbindung von den eingerichteten Verbindungen für jede der Medienkapazitätsforderungen durch den teilnehmenden PoC-Server Folgendes umfasst: willkürliches Auswählen einer Verbindung von den eingerichteten Verbindungen für die UEs, die auf den teilnehmenden PoC-Server zugreifen; oder willkürliches Auswählen einer Verbindung von den eingerichteten Verbindungen für die wenigstens zwei UEs, die an der Sitzung teilnehmen und die gleiche Medienkapazitätsforderung aufweisen, und
das Auswählen einer Verbindung von den eingerichteten Verbindungen für jede der Medienkapazitätsforderungen durch den steuernden PoC-Server Folgendes umfasst: willkürliches Auswählen einer Verbindung von den eingerichteten Verbindungen für die UEs, die auf den teilnehmenden PoC-Server zugreifen; oder willkürliches Auswählen einer Verbindung von den eingerichteten Verbindungen für die wenigstens zwei UEs, die auf den teilnehmenden PoC-Server zugreifen und die gleiche Medienkapazitätsforderung aufweisen.

11. Verfahren nach einem der Ansprüche 3, 4, 8 bis 10, ferner umfassend das Einstellen der Verbindungseigenschaften wie folgt:
(a) Einstellen der Eigenschaft der gemeinsam genutzten Verbindung als "Nur Senden" und Einstellen der Eigenschaften von Verbindungen, die von der gemeinsam genutzten Verbindung verschieden sind, als "Nur Empfangen" für den steuernden PoC-Server; oder
(b) Einstellen der Eigenschaft der gemeinsam genutzten Verbindung als "Nur Empfangen" und Einstellen der Eigenschaften von Verbindungen, die von der gemeinsam genutzten Verbindung verschieden sind, als "Nur Senden" für den teilnehmenden PoC-Server; oder
(c) Einstellen der Eigenschaft der gemeinsam genutzten Verbindung als "Senden und Empfangen".

12. Verfahren nach einem der Ansprüche 3, 4, 8 bis 10, ferner umfassend das Einstellen der Verbindungseigenschaften wie folgt:
(a) Einstellen der Eigenschaft der gemeinsam genutzten Verbindung als "Aktiv" und Einstellen der Eigenschaften von Verbindungen, die von der gemeinsam genutzten Verbindung verschieden sind, als "Inaktiv oder Aktiv"; oder
(b) Einstellen der Eigenschaft der gemeinsam genutzten Verbindung als "Senden und Empfangen und Aktiv" und Einstellen der Eigenschaften von Verbindungen, die von der gemeinsam genutzten Verbindung verschieden sind, als "Inaktiv".

13. Verfahren nach Anspruch 7, wobei das Einrichten der gemeinsam genutzten Verbindung Folgendes umfasst:
(a) Bestimmen verschiedener Medienkapazitätsforderungen von UEs, die auf den teilnehmenden PoC-Server zugreifen und an der Sitzung teilnehmen, durch den teilnehmenden PoC-Server und Einrichten einer neuen Verbindung als die gemeinsam genutzte Verbindung der wenigstens zwei UEs, die an der Sitzung teilnehmen, auf den teilnehmenden PoC-Server zugreifen und die gleiche Medienkapazitätsforderung aufweisen, durch den teilnehmenden PoC-Server und den steuernden PoC-Server; oder
(b) Bestimmen von teilnehmenden PoC-Servern, auf die UEs zugreifen, die an der Sitzung teilnehmen, durch den steuernden PoC-Server, Bestimmen verschiedener Medienkapazitätsforderungen von UEs, die auf den teilnehmenden PoC-Server zugreifen und an der Sitzung teilnehmen für jeden der teilnehmenden PoC-Server durch den steuernden PoC-Server und Einrichten (1006) einer neuen Verbindung als die gemeinsam genutzte Verbindung der wenigstens zwei UEs, die an der Sitzung teilnehmen, auf den teilnehmenden PoC-Server zugreifen und die gleiche Medienkapazitätsforderung aufweisen, durch den steuernden PoC-Server und jeden der teilnehmenden PoC-Server.

14. Verfahren nach Anspruch 13, wobei
das Einrichten einer neuen Verbindung als die gemeinsam genutzte Verbindung für die wenigstens zwei UEs, die an der Sitzung teilnehmen, auf den teilnehmenden PoC-Server zugreifen und die gleiche Medienkapazitätsforderung aufweisen, durch den teilnehmenden PoC-Server und den steuernden PoC-Server Folgendes umfasst: Einrichten einer Untersitzung für die wenigstens zwei UEs, die an der Sitzung teilnehmen, auf den teilnehmenden PoC-Server zugreifen, und die gleiche Medienkapazitätsforderung aufweisen, durch den teilnehmenden PoC-Server und Einrichten einer Verbindung für die Untersitzung als die gemeinsam genutzte Verbindung der wenigstens zwei UEs, die zu der Untersitzung gehören, durch den teilnehmenden PoC-Server und den steuernden PoC-Server; und
das Einrichten einer neuen Verbindung als die gemeinsam genutzte Verbindung der wenigstens zwei UEs, die an der Sitzung teilnehmen, auf den teilnehmenden PoC-Server zugreifen und die gleiche Medienkapazitätsforderung aufweisen, durch den steuernden PoC-Server und jeden der teilnehmenden PoC-Server Folgendes umfasst: Einrichten einer Untersitzung für die wenigstens zwei UEs, die die Medienkapazitätsforderung aufweisen, durch den steuernden PoC-Server und Einrichten (1106) einer Verbindung für die Untersitzung als die gemeinsam genutzte Verbindung der wenigstens zwei UEs, die an der Sitzung teilnehmen, auf den teilnehmenden PoC-Server zugreifen und zu der Untersitzung gehören, durch den steuernden PoC-Server und den teilnehmenden PoC-Server.

15. Verfahren nach Anspruch 14, das ferner Folgendes umfasst:
Bestimmen einer Medienkapazitätsforderung, die der UE und anderen UEs gemeinsam ist, wenn sich die ursprüngliche Medienkapazitätsforderung der UE ändert, durch den steuernden PoC-Server oder den teilnehmenden PoC-Server einer UE, Beurteilen, ob eine Untersitzung, die der Medienkapazitätsforderung entspricht, die der UE und anderen UEs gemeinsam ist, in dem teilnehmenden PoC-Server der UE eingerichtet wurde, und dann, wenn die Untersitzung eingerichtet wurde, Hinzufügen der UE zu der Untersitzung; dann, wenn die Untersitzung nicht eingerichtet wurde, Einrichten einer Untersitzung für die Medienkapazitätsforderung, die der UE und anderen UEs gemeinsam ist, Hinzufügen der UE zu der eingerichteten Untersitzung und Einrichten einer gemeinsam genutzten Verbindung für die Untersitzung.

16. Verfahren nach Anspruch 15, das ferner Folgendes umfasst:
Bestimmen (1202) der ursprünglichen Untersitzung, zu der die UE gehört, durch den steuernden PoC-Server oder den teilnehmenden PoC-Server der UE, Beurteilen (1202), ob die UE die letzte UE der ursprünglichen Untersitzung, zu der die UE gehört, ist, und dann, wenn die UE die letzte UE der ursprünglichen Untersitzung, zu der die UE gehört, ist, Auflösen (1203) der ursprünglichen Untersitzung, zu der die UE gehört, und der gemeinsam genutzten Verbindung, die der Untersitzung entspricht; dann, wenn die UE nicht die letzte UE der ursprünglichen Untersitzung, zu der die UE gehört, ist, Bewahren der ursprünglichen Untersitzung, zu der die UE gehört.

17. Verfahren nach einem der Ansprüche 8 bis 10 und 13, das ferner Folgendes umfasst:
Bestimmen einer Medienkapazitätsforderung, die der UE und anderen UEs gemeinsam ist, wenn sich die ursprüngliche Medienkapazitätsforderung der UE ändert, durch den steuernden PoC-Server oder den teilnehmenden PoC-Server einer UE, Beurteilen, ob eine Verbindung, die der Medienkapazitätsforderung entspricht, die der UE und anderen UEs gemeinsam ist, in dem teilnehmenden PoC-Server der UE eingerichtet wurde, und dann, wenn die Verbindung eingerichtet wurde, Hinzufügen der UE zu der Verbindung, die der Medienkapazitätsforderung entspricht, die der UE und anderen UEs gemeinsam ist; dann, wenn die Verbindung nicht eingerichtet wurde, Einrichten einer neuen Verbindung für die Medienkapazitätsforderung, die der UE und anderen UEs gemeinsam ist, und Hinzufügen der UE zu der neu eingerichteten Verbindung.

18. Verfahren nach Anspruch 17, das ferner Folgendes umfasst:
Bestimmen der ursprünglichen Verbindung, die der UE entspricht, durch den steuernden PoC-Server oder den teilnehmenden PoC-Server der UE, Beurteilen (1202), ob die UE die letzte UE ist, die der Verbindung entspricht, und dann, wenn die UE die letzte UE ist, die der Verbindung entspricht, Auflösen (1203) der ursprünglichen Verbindung, die der UE entspricht; dann, wenn die UE nicht die letzte UE ist, die der Verbindung entspricht, Bewahren der ursprünglichen Verbindung, die der UE entspricht.

19. Verfahren nach einem der Ansprüche 1 bis 10, 13 und 14, das ferner Folgendes umfasst:
Bestimmen der gemeinsam genutzten Verbindung, die der UE entspricht, wenn die UE die Sitzung verlässt, durch den steuernden PoC-Server oder den teilnehmenden PoC-Server einer UE, Beurteilen (1202), ob die UE die letzte UE der gemeinsam genutzten Verbindung ist, und dann, wenn die UE die letzte UE der gemeinsam genutzten Verbindung ist, Auflösen (1203) der gemeinsam genutzten Verbindung; dann, wenn die UE nicht die letzte UE der gemeinsam genutzten Verbindung ist, Verlassen der gemeinsam genutzten Verbindung durch die UE und Bewahren der gemeinsam genutzten Verbindung.

20. Verfahren nach einem der Ansprüche 7 bis 10 und 13 bis 16, wobei die Medienkapazitätsforderung Folgendes umfasst: Medientyp und/oder Codierungs- und Decodierungsformat und/oder Protokoll und Bandbreite der Mediendatenkapselung; und
die gleiche Medienkapazitätsforderung eines dieser Elemente oder eine Kombination dieser Elemente in der Medienkapazitätsforderung von jeder der UEs ist.

21. Verfahren nach Anspruch 2, wobei das Einrichten der gemeinsam genutzten Verbindung zwischen dem steuernden PoC-Server und dem teilnehmenden PoC-Server Folgendes umfasst:
Einrichten der gemeinsam genutzten Verbindung zwischen dem teilnehmenden PoC-Server und dem steuernden PoC-Server durch den teilnehmenden PoC-Server;
wobei das Verfahren ferner Folgendes umfasst:
Empfangen von Mediendaten, die von dem steuernden PoC-Server gesendet werden, über die gemeinsam genutzte Verbindung; und
Senden der Mediendaten an die wenigstens zwei UEs, die auf den teilnehmenden PoC-Server zugreifen.

22. Verfahren nach Anspruch 21, wobei das Einrichten der gemeinsam genutzten Verbindung zwischen dem teilnehmenden PoC-Server und dem steuernden PoC-Server durch den teilnehmenden PoC-Server Folgendes umfasst:
Einrichten der gemeinsam genutzten Verbindung für die wenigstens zwei UEs, die an der Sitzung teilnehmen, auf den teilnehmenden PoC-Server zugreifen und die gleiche Medienkapazitätsforderung zwischen dem teilnehmenden PoC-Server und dem steuernden PoC-Server aufweisen, durch den teilnehmenden PoC-Server.

23. System zum Einrichten einer Verbindung für einen Zellen-Push-to-Talk-Dienst (PoC-Dienst), das Folgendes umfasst: einen steuernden PoC-Server, der Steuerungsfunktionen ausführt, und einen teilnehmenden PoC-Server, der Teilnahmefunktionen ausführt, wobei der teilnehmende PoC-Server Verbindungseinrichtungsanforderungen empfängt, die von wenigstens zwei UEs, die auf den teilnehmenden PoC-Server zugreifen, gesendet werden;
der steuernde PoC-Server und der teilnehmende PoC-Server eingerichtet sind, um eine gemeinsam genutzte Verbindung zwischen dem steuernden PoC-Server und dem teilnehmenden PoC-Server einzurichten, wobei die gemeinsam genutzte Verbindung eingerichtet ist, um Mediendaten des PoC-Dienstes für die wenigstens zwei UEs, die auf den teilnehmenden PoC-Server zugreifen, zu übertragen; und
der steuernde PoC-Server und der teilnehmende PoC-Server ferner eingerichtet sind, um die Mediendaten des PoC-Dienstes zwischen dem steuernden PoC-Server und dem teilnehmenden PoC-Server über die gemeinsam genutzte Verbindung zu übertragen.

24. System nach Anspruch 23, wobei
der steuernde PoC-Server ferner eingerichtet ist, um teilnehmende PoC-Server, auf die UEs zugreifen, die an der Sitzung teilnehmen, zu bestimmen, eine gemeinsam genutzte Verbindung für wenigstens zwei UEs, die auf den teilnehmenden PoC-Server zugreifen und an der Sitzung zwischen dem steuernden PoC-Server und jedem der teilnehmenden PoC-Server teilnehmen, einzurichten und eine Benachrichtigung über die gemeinsam genutzte Verbindung an den teilnehmenden PoC-Server zu senden; und
der teilnehmende PoC-Server ferner eingerichtet ist, um die von dem steuernden PoC-Server gesendete Benachrichtigung zu empfangen.

25. System nach Anspruch 23, wobei
der teilnehmende PoC-Server ferner eingerichtet ist, um wenigstens zwei UEs, die auf den teilnehmenden PoC-Server zugreifen und an der Sitzung teilnehmen, zu bestimmen, eine gemeinsam genutzte Verbindung für wenigstens zwei UEs, die auf den teilnehmenden PoC-Server zugreifen und an der Sitzung zwischen dem teilnehmenden PoC-Server und dem steuernden PoC-Server teilnehmen, einzurichten und eine Benachrichtigung über die gemeinsam genutzte Verbindung an den steuernden PoC-Server zu senden; und der steuernde PoC-Server eingerichtet ist, um die gemeinsam genutzte Verbindung zu bestimmen, die zwischen dem steuernden PoC-Server und dem teilnehmenden PoC-Server gemäß der von der Verbindungsverwaltungseinheit gesendeten Benachrichtigung eingerichtet wurde.

26. System nach Anspruch 23, das ferner Folgendes umfasst:
die Verbindungsverwaltungseinheit, die eingerichtet ist, um eine gemeinsam genutzte Verbindung für wenigstens zwei UEs, die auf den teilnehmenden PoC-Server zugreifen und an der Sitzung zwischen der Verbindungsverwaltungseinheit und dem steuernden PoC-Server teilnehmen, einzurichten und eine Benachrichtigung über die gemeinsam genutzte Verbindung an den steuernden PoC-Server zu senden, und eine Verbindung für jede der UEs, die an der Sitzung zwischen der Verbindungsverwaltungseinheit und dem teilnehmenden PoC-Server teilnehmen, einzurichten; und
der steuernde PoC-Server eingerichtet ist, um die gemeinsam genutzte Verbindung zu bestimmen, die zwischen dem steuernden PoC-Server und dem teilnehmenden PoC-Server gemäß der von der Verbindungsverwaltungseinheit gesendeten Benachrichtigung eingerichtet wurde.

27. Teilnehmender Zellen-Push-to-Talk-Server (PoC-Server) der Folgendes umfasst:
Mittel, die eingerichtet sind, um Verbindungseinrichtungsanforderungen zu empfangen, die von wenigstens zwei UEs, die auf den teilnehmenden PoC-Server zugreifen, gesendet werden;
Mittel, die eingerichtet sind, um eine gemeinsam genutzte Verbindung zwischen dem teilnehmenden PoC-Server und einem steuernden PoC-Server einzurichten; wobei die gemeinsam genutzte Verbindung eingerichtet ist, um Mediendaten des PoC-Dienstes für die wenigstens zwei UEs, die auf den teilnehmenden PoC-Server zugreifen, zu übertragen; und
Mittel, die eingerichtet sind, um die Mediendaten des PoC-Dienstes zwischen dem steuernden PoC-Server und dem teilnehmenden PoC-Server über die gemeinsam genutzte Verbindung zu übertragen.

28. Steuernder Zellen-Push-to-Talk-Server (PoC-Server) der Folgendes umfasst:
Mittel, die eingerichtet sind, um eine gemeinsam genutzte Verbindung zwischen dem steuernden PoC-Server und einem teilnehmenden PoC-Server einzurichten; wobei die gemeinsam genutzte Verbindung eingerichtet ist, um Mediendaten des PoC-Dienstes für wenigstens zwei UEs, die auf den teilnehmenden PoC-Server zugreifen, zu übertragen; und
Mittel, die eingerichtet sind, um die Mediendaten des PoC-Dienstes zwischen dem steuernden PoC-Server und dem teilnehmenden PoC-Server über die gemeinsam genutzte Verbindung zu übertragen.

## Revendications

1. Procédé d'établissement d'une connexion pour un service de messagerie vocale instantanée PoC (Push to Talk over Cellular), comprenant :
la réception (202), par un Serveur PoC Participant exécutant une fonction de participation, de requêtes d'établissement de connexion envoyées par au moins deux UE sollicitant le Serveur PoC Participant ;
l'établissement (206), par un Serveur PoC de Commande exécutant une fonction de commande et le Serveur PoC Participant, d'une connexion partagée entre le Serveur PoC de Commande et le Serveur PoC Participant, la connexion partagée étant configurée pour transmettre des données multimédia du service PoC pour les au moins deux UE sollicitant le Serveur PoC Participant ; et
la transmission (207), par le Serveur PoC de Commande et le Serveur PoC Participant, des données multimédia du service PoC entre le Serveur PoC de Commande et le Serveur PoC Participant par l'intermédiaire de la connexion partagée.

2. Procédé selon la revendication 1, dans lequel les au moins deux UE sollicitant le Serveur PoC Participant comprennent une partie ou la totalité des UE participant à la session courante et sollicitant le Serveur PoC Participant.

3. Procédé selon la revendication 2, dans lequel l'établissement de la connexion partagée comprend l'une des opérations suivantes :
(a) l'établissement, par le Serveur PoC Participant et le Serveur PoC de Commande, d'une connexion pour chacun des UE participant à une session et sollicitant le Serveur PoC Participant, et l'établissement d'une nouvelle connexion comme connexion partagée pour les au moins deux UE sollicitant le Serveur PoC Participant et participant à la session ;
(b) la détermination, par le Serveur PoC de Commande, des Serveurs PoC Participants sollicités par les UE participant à la session, l'établissement, par le Serveur PoC de Commande et chacun des Serveurs PoC Participants, d'une connexion pour chacun des UE participant à la session, et l'établissement (306), par le Serveur PoC de Commande et chacun des Serveurs PoC Participants, d'une nouvelle connexion comme connexion partagée pour les au moins deux UE sollicitant le Serveur PoC Participant et participant à la session.

4. Procédé selon la revendication 2, dans lequel l'établissement de la connexion partagée comprend l'une des opérations suivantes :
(a) l'établissement, par le Serveur PoC Participant et le Serveur PoC de Commande, d'une connexion pour chacun des UE sollicitant le Serveur PoC Participant et participant à la session, la sélection, par le Serveur PoC Participant, de l'une des connexions établies comme connexion partagée pour les au moins deux UE participant à la session et sollicitant le Serveur PoC Participant ;
(b) la détermination, par le Serveur PoC de Commande, des Serveurs PoC Participants sollicités par les UE participant à la session, l'établissement, par le Serveur PoC de Commande et chacun des Serveurs PoC Participants, d'une connexion pour chacun des UE participant à la session, et la sélection, par le Serveur PoC de Commande et chacun des Serveurs PoC Participants, d'une des connexions établies comme connexion partagée pour les au moins deux UE sollicitant le Serveur PoC Participant et participant à la session.

5. Procédé selon la revendication 2, dans lequel l'établissement de la connexion partagée comprend l'une des opérations suivantes :
(a) l'établissement, par le Serveur PoC Participant et le Serveur PoC de Commande, de la connexion partagée pour les au moins deux UE sollicitant le Serveur PoC Participant et participant à la session ;
(b) la détermination, par le Serveur PoC de Commande, des Serveurs PoC Participants sollicités par les UE participant à la session, et l'établissement (406), par le Serveur PoC de Commande et chacun des Serveurs PoC Participants, de la connexion partagée pour les au moins deux UE sollicitant le Serveur PoC Participant et participant à la session.

6. Procédé selon la revendication 5, dans lequel
l'établissement, par le Serveur PoC Participant et le Serveur PoC de Commande, de la connexion partagée pour les au moins deux UE sollicitant le Serveur PoC Participant et participant à la session comprend :
l'établissement (402), par le Serveur PoC Participant, d'une sous-session pour les au moins deux UE sollicitant le Serveur PoC Participant et participant à la session, et
l'établissement, par le Serveur PoC Participant et le Serveur PoC de Commande, d'une connexion pour la sous-session comme connexion partagée des au moins deux UE ; et
l'établissement, par le Serveur PoC de Commande et chacun des Serveurs PoC Participants, de la connexion partagée pour les au moins deux UE participant à la session et sollicitant le Serveur PoC Participant comprend :
l'établissement, par le Serveur PoC de Commande et chacun des Serveurs PoC Participants, d'une sous-session pour les au moins deux UE sollicitant le Serveur PoC Participant et participant à la session, et l'établissement (406) d'une connexion pour la sous-session comme connexion partagée des au moins deux UE.

7. Procédé selon la revendication 1, dans lequel l'établissement de la connexion partagée comprend :
l'établissement (606) de la connexion partagée pour les au moins deux UE participant à la session, sollicitant le Serveur PoC Participant, et ayant la même demande de capabilité multimédia.

8. Procédé selon la revendication 7, dans lequel l'établissement de la connexion partagée comprend l'une des opérations suivantes :
(a) l'établissement, par le Serveur PoC Participant et le Serveur PoC de Commande, d'une connexion pour chacun des UE sollicitant le Serveur PoC Participant et participant à la session ; la détermination, par le Serveur PoC Participant, de diverses demandes de capabilité multimédia des UE sollicitant le Serveur PoC Participant, et l'établissement, par le Serveur PoC Participant et le Serveur PoC de Commande, d'une nouvelle connexion comme connexion partagée pour les au moins deux UE participant à la session, sollicitant le Serveur PoC Participant, et ayant la même demande de capabilité multimédia ;
(b) la détermination, par le Serveur PoC de Commande, des Serveurs PoC Participants sollicités par les UE participant à la session, l'établissement, par le Serveur PoC de Commande et chacun des Serveurs PoC Participants, d'une connexion pour chacun des UE participant à la session, la détermination, par le Serveur PoC de Commande, de diverses demandes de capabilité multimédia des UE sollicitant le Serveur PoC Participant et participant à la session, et l'établissement (706), par le Serveur PoC de Commande et le Serveur PoC Participant, d'une nouvelle connexion comme connexion partagée pour les au moins deux UE participant à la session, sollicitant le Serveur PoC Participant et ayant la même demande de capabilité multimédia.

9. Procédé selon la revendication 7, dans lequel l'établissement de la connexion partagée comprend l'une des opérations suivantes :
(a) l'établissement, par le Serveur PoC Participant et le Serveur PoC de Commande, d'une connexion pour chacun des UE sollicitant le Serveur PoC Participant et participant à la session ; la détermination, par le Serveur PoC Participant, de diverses demandes de capabilité multimédia des UE sollicitant le Serveur PoC Participant et participant à la session, et la sélection de l'une des connexions établies comme connexion partagée pour les au moins deux UE participant à la session, sollicitant le Serveur PoC Participant, et ayant la même demande de capabilité multimédia ;
(b) la détermination, par le Serveur PoC de Commande, des Serveurs PoC Participants sollicités par les UE participant à la session, l'établissement (806), par le Serveur PoC de Commande et chacun des Serveurs PoC Participants, d'une connexion pour chacun des UE participant à la session, la détermination de diverses demandes de capabilité multimédia des UE sollicitant le Serveur PoC Participant et participant à la session, et la sélection de l'une des connexions établies comme connexion partagée pour les au moins deux UE participant à la session, sollicitant le Serveur PoC Participant et ayant la même demande de capabilité multimédia.

10. Procédé selon la revendication 9,
dans lequel la sélection, par le Serveur PoC Participant, d'une connexion parmi les connexions établies pour chacune des demandes de capabilité multimédia comprend l'une des opérations suivantes :
la sélection arbitraire d'une connexion parmi les connexions établies pour les UE sollicitant le Serveur PoC Participant, et la sélection arbitraire d'une connexion parmi les connexions établies pour les au moins deux UE participant à la session et ayant la même demande de capabilité multimédia ; et
la sélection, par le Serveur PoC de Commande, d'une connexion parmi les connexions établies pour chacune des demandes de capabilité multimédia comprend l'une des opérations suivantes : la sélection arbitraire d'une connexion parmi les connexions établies pour les UE sollicitant le Serveur PoC Participant, et la sélection arbitraire d'une connexion parmi les connexions établies pour les au moins deux UE sollicitant le Serveur PoC Participant et ayant la même demande de capabilité multimédia.

11. Procédé selon l'une quelconque des revendications 3, 4, 8 à 10, comprenant en outre le réglage des propriétés des connexions comme l'un d'un :
(a) réglage de la propriété de la connexion partagée sur Envoi Uniquement, et réglage des propriétés des connexions autres que la connexion partagée sur Réception Uniquement pour le Serveur PoC de Commande ;
(b) réglage de la propriété de la connexion partagée sur Réception Uniquement, et réglage des propriétés des connexions autres que la connexion partagée sur Envoi Uniquement pour le Serveur PoC Participant ; et
(c) réglage de la propriété de la connexion partagée sur Envoi et Réception.

12. Procédé selon l'une quelconque des revendications 3, 4, 8 à 10, comprenant en outre le réglage des propriétés des connexions comme l'un d'un :
(a) réglage de la propriété de la connexion partagée sur Active, et réglage des propriétés des connexions autres que la connexion partagée sur Inactive ou Active ; et
(b) réglage de la propriété de la connexion partagée sur Envoi et Réception et Active, et réglage des propriétés des connexions autres que la connexion partagée sur Inactive.

13. Procédé selon la revendication 7, dans lequel l'établissement de la connexion partagée comprend l'une des opérations suivantes :
(a) la détermination, par le Serveur PoC Participant, de diverses demandes de capabilité multimédia des UE sollicitant le Serveur PoC Participant et participant à la session, et l'établissement, par le Serveur PoC Participant et le Serveur PoC de Commande, d'une nouvelle connexion comme connexion partagée des au moins deux UE participant à la session, sollicitant le Serveur PoC Participant, et ayant la même demande de capabilité multimédia ;
(b) la détermination, par le Serveur PoC de Commande, des Serveurs PoC Participants sollicités par les UE participant à la session, la détermination, par le Serveur PoC de Commande, de diverses demandes de capabilité multimédia des UE sollicitant le Serveur PoC Participant et participant à la session pour chacun des Serveurs PoC Participants, et l'établissement (1006), par le Serveur PoC de Commande et chacun des Serveurs PoC Participants, d'une nouvelle connexion comme connexion partagée des au moins deux UE participant à la session, sollicitant le Serveur PoC Participant et ayant la même demande de capabilité multimédia.

14. Procédé selon la revendication 13, dans lequel
l'établissement, par le Serveur PoC Participant et le Serveur PoC de Commande, d'une nouvelle connexion comme connexion partagée pour les au moins deux UE participant à la session, sollicitant le Serveur PoC Participant, et ayant la même demande de capabilité multimédia comprend : l'établissement, par le Serveur PoC Participant, d'une sous-session pour les au moins deux UE participant à la session, sollicitant le Serveur PoC Participant et ayant la même demande de capabilité multimédia, et l'établissement, par le Serveur PoC Participant et le Serveur PoC de Commande, d'une connexion pour la sous-session comme connexion partagée des au moins deux UE appartenant à la sous-session ; et
l'établissement, par le Serveur PoC de Commande et chacun des Serveurs PoC Participants, d'une nouvelle connexion comme connexion partagée des au moins deux UE participant à la session, sollicitant le Serveur PoC Participant et ayant la même demande de capabilité multimédia comprend : l'établissement, par le Serveur PoC de Commande, d'une sous-session pour les au moins deux UE ayant la même demande de capabilité multimédia, et l'établissement (1106), par le Serveur PoC de Commande et le Serveur PoC Participant, d'une connexion pour la sous-session comme connexion partagée des au moins deux UE participant à la session, sollicitant le Serveur PoC Participant et appartenant à la sous-session.

15. Procédé selon la revendication 14, comprenant en outre :
la détermination, par le Serveur PoC de Commande ou le Serveur PoC Participant d'un UE, d'une demande de capabilité multimédia partagée par l'UE et d'autres UE quand la demande de capabilité multimédia d'origine de l'UE change, le jugement si une sous-session correspondant à la demande de capabilité multimédia partagée par l'UE et d'autres UE a été établie ou non dans le Serveur PoC Participant de l'UE, et si la sous-session a été établie, l'ajout de l'UE à la sous-session ; si la sous-session n'a pas été établie, l'établissement d'une sous-session pour la demande de capabilité multimédia partagée par l'UE et d'autres UE, l'ajout de l'UE à la sous-session établie, et l'établissement d'une connexion partagée pour la sous-session.

16. Procédé selon la revendication 15, comprenant en outre :
la détermination (1202), par le Serveur PoC de Commande ou le Serveur PoC Participant de l'UE, de la sous-session d'origine à laquelle appartient l'UE, le jugement (1202) si l'UE est ou non le dernier UE de la sous-session d'origine à laquelle appartient l'UE, et si l'UE est le dernier UE de la sous-session d'origine à laquelle appartient l'UE, la libération (1203) de la sous-session d'origine à laquelle appartient l'UE et de la connexion partagée correspondant à la sous-session ; si l'UE n'est pas le dernier UE de la sous-session d'origine à laquelle appartient l'UE, la réservation de la sous-session d'origine à laquelle appartient l'UE.

17. Procédé selon l'une quelconque des revendications 8 à 10 et 13, comprenant en outre :
la détermination, par le Serveur PoC de Commande ou le Serveur PoC Participant d'un UE, d'une demande de capabilité multimédia partagée par l'UE et d'autres UE quand la demande de capabilité multimédia d'origine de l'UE change, le jugement si une connexion correspondant à la demande de capabilité multimédia partagée par l'UE et d'autres UE a été établie ou non dans le Serveur PoC Participant de l'UE, et si la connexion a été établie, l'ajout de l'UE à la connexion correspondant à la demande de capabilité multimédia partagée par l'UE et d'autres UE ; si la connexion n'a pas été établie, l'établissement d'une nouvelle connexion pour la demande de capabilité multimédia partagée par l'UE et d'autres UE et l'ajout de l'UE à la connexion nouvellement établie.

18. Procédé selon la revendication 17, comprenant en outre :
la détermination, par le Serveur PoC de Commande ou le Serveur PoC Participant de l'UE, de la connexion d'origine correspondant à l'UE, le jugement (1202) si l'UE est ou non le dernier UE correspondant à la connexion, et si l'UE est le dernier UE correspondant à la connexion, la libération (1203) de la connexion d'origine correspondant à l'UE ; si l'UE n'est pas le dernier UE correspondant à la connexion, la réservation de la connexion d'origine correspondant à l'UE.

19. Procédé selon l'une quelconque des revendications 1 à 10, 13 et 14, comprenant en outre :
la détermination, par le Serveur PoC de Commande ou le Serveur PoC Participant de l'UE, de la connexion partagée correspondant à l'UE quand l'UE quitte la session, le jugement (1202) si l'UE est ou non le dernier UE de la connexion partagée, et si l'UE est le dernier UE de la connexion partagée, la libération (1203) de la connexion partagée ; si l'UE n'est pas le dernier UE de la connexion partagée, l'abandon, par l'UE, de la connexion partagée et la réservation de la connexion partagée.

20. Procédé selon l'une quelconque des revendications 7 à 10, 13 à 16, dans lequel la demande de capabilité multimédia comprend au moins l'un d'un : type multimédia, format de codage et de décodage, protocole d'encapsulation de données multimédia et largeur de bande ; et
la même demande de capabilité multimédia est l'un quelconque des mêmes éléments dans la demande de capabilité multimédia de chacun des UE ou n'importe quelle combinaison de ceux-ci.

21. Procédé selon la revendication 2, dans lequel l'établissement de la connexion partagée entre le Serveur PoC de Commande et le Serveur PoC Participant comprend :
l'établissement, par le Serveur PoC Participant, de la connexion partagée entre le Serveur PoC Participant et le Serveur PoC de Commande ;
le procédé comprenant en outre :
la réception de données multimédia envoyées par le Serveur PoC de Commande par l'intermédiaire de la connexion partagée ; et
la transmission des données multimédia à au moins deux UE qui sollicitent le Serveur PoC Participant.

22. Procédé selon la revendication 21, dans lequel l'établissement, par le Serveur PoC Participant, de la connexion partagée entre le Serveur PoC Participant et le Serveur PoC de Commande comprend :
l'établissement, par le Serveur PoC Participant, de la connexion partagée pour les au moins deux UE participant à la session, sollicitant le Serveur PoC Participant et ayant la même demande de capabilité multimédia entre le Serveur PoC Participant et le Serveur PoC de Commande.

23. Système d'établissement d'une connexion pour un service de messagerie vocale instantanée PoC (Push to Talk over Cellular), comprenant : un Serveur PoC de Commande exécutant une fonction de commande et un Serveur PoC Participant exécutant une fonction de participation, dans lequel
le Serveur PoC Participant reçoit des requêtes d'établissement de connexion envoyées par au moins deux UE sollicitant le Serveur PoC Participant ;
le Serveur PoC de Commande et le Serveur PoC Participant sont configurés pour établir une connexion partagée entre le Serveur PoC de Commande et le Serveur PoC Participant, la connexion partagée étant configurée pour transmettre des données multimédia du service PoC pour les au moins deux UE sollicitant le Serveur PoC Participant ; et
le Serveur PoC de Commande et le Serveur PoC Participant sont configurés en outre pour transmettre les données multimédia du service PoC entre le Serveur PoC de Commande et le Serveur PoC Participant par l'intermédiaire de la connexion partagée.

24. Système selon la revendication 23, dans lequel
le Serveur PoC de Commande est configuré en outre pour déterminer les Serveurs PoC Participants sollicités par les EU participant à la session, établir une connexion partagée pour au moins deux UE sollicitant le Serveur PoC Participant et participant à la session entre le Serveur PoC de Commande et chacun des Serveurs PoC Participants et envoyer une notification de la connexion partagée au Serveur PoC Participant ; et
le Serveur PoC Participant est configuré en outre pour recevoir la notification envoyée par le Serveur PoC de Commande.

25. Système selon la revendication 23, dans lequel
le Serveur PoC Participant est configuré en outre pour déterminer au moins deux UE sollicitant le Serveur PoC Participant et participant à la session, établir une connexion partagée pour au moins deux UE sollicitant le Serveur PoC Participant et participant à la session entre le Serveur PoC Participant et le Serveur PoC de Commande, et envoyer une notification de la connexion partagée au Serveur PoC de Commande ; et
le Serveur PoC de Commande est configuré pour déterminer la connexion partagée établie entre le Serveur PoC de Commande et le Serveur PoC Participant en fonction de la notification envoyée par l'unité de gestion de connexion.

26. Système selon la revendication 23, comprenant en outre :
l'unité de gestion de connexion, configurée pour établir une connexion partagée pour au moins deux UE sollicitant le Serveur PoC Participant et participant à la session entre l'unité de gestion de connexion et le Serveur PoC de Commande et envoyer une notification de la connexion partagée au Serveur PoC de Commande, et établir une connexion pour chacun des UE participant à la session entre l'unité de gestion de connexion et le Serveur PoC Participant ; et
le Serveur PoC de Commande est configuré pour déterminer la connexion partagée établie entre le Serveur PoC de Commande et le Serveur PoC Participant en fonction de la notification envoyée par l'unité de gestion de connexion.

27. Serveur de Messagerie Vocale Instantanée, PoC, Participant, comprenant :
un moyen configuré pour recevoir des requêtes d'établissement de connexion envoyées par au moins deux UE sollicitant le Serveur PoC Participant ;
un moyen configuré pour établir une connexion partagée entre le Serveur PoC de Commande et le Serveur PoC Participant, la connexion partagée étant configurée pour transmettre des données multimédia du service PoC pour les au moins deux UE sollicitant le Serveur PoC Participant ; et
un moyen configuré pour transmettre les données multimédia du service PoC entre le Serveur PoC de Commande et le Serveur PoC Participant par l'intermédiaire de la connexion partagée.

28. Serveur de Messagerie Vocale Instantanée, PoC, de Commande, comprenant :
un moyen configuré pour établir une connexion partagée entre le Serveur PoC de Commande et le Serveur PoC Participant, la connexion partagée étant configurée pour transmettre des données multimédia du service PoC pour les au moins deux UE sollicitant le Serveur PoC Participant ; et
un moyen configuré pour transmettre les données multimédia du service PoC entre le Serveur PoC de Commande et le Serveur PoC Participant par l'intermédiaire de la connexion partagée.
